# EUROPEAN PATENT SPECIFICATION

(11) **EP 1 192 758 B1**
(45) Date of publication and mention of the grant of the patent: **07.02.2007**
(21) Application number: 00939602.9
(22) Date of filing: 06.06.2000
(51) Int. Cl.: H04L 12/28, H04L 12/56, H04L 29/06, H04L 12/66, H04L 12/26, H04L 29/08

(54) **METHODS AND SYSTEMS FOR COMMUNICATING SS7 MESSAGES OVER PACKET-BASED NETWORK USING TRANSPORT ADAPTER LAYER INTERFACE**
VERFAHREN UND SYSTEME ZUR MITTEILUNG VON SS7-NACHRICHTEN ÜBER EIN PAKETBASIERTES NETZ UNTER VERWENDUNG EINER TRANSPORTANPASSUNGSSCHICHTSCHNITTSTELLE
PROCEDES ET SYSTEMES DE TRANSMISSION DE MESSAGES SS7 SUR UN RESEAU BASE SUR DES PAQUETS, A L'AIDE D'UNE INTERFACE DE COUCHE ADAPTATEUR DE TRANSPORT

(30) Priority: 07.06.1999 US 137988 P; 19.11.1999 US 443712
(43) Date of publication of application: 03.04.2002
(73) Proprietor: Tekelec, Calabasas, CA 91302 (US)
(72) Inventor: BENEDYK, Robby, Darren, Raleigh, NC 27613 (US); SPRAGUE, David, Michael, Raleigh, NC 27615 (US); BRENDES, Dan, Alan, Raleigh, NC 27615 (US)
(74) Representative: Reinhard - Skuhra - Weise & Partner
(86) International application number: PCT/US2000/015561
(87) International publication number: WO 2000/076134

(56) References cited:
- WO-A-98/28879
- WO-A-98/28885
- US-A- 6 021 126
- US-A- 6 064 653
- US-A- 6 069 890
- US-A- 6 075 783
- US-A- 6 079 036
- SPRAGUE D. ET ALL: "Transport Adapter Layer Interface" 28 May 1999 (1999-05-28) , IETF INTERNET DRAFT , INTERNET ENGINEERING TASK FORCE XP002237741 * abstract * section 1: Introduction section 2: Architecture section 3: TALI section 4: Message Trasnport
- BRESSLER W.: "SS7 Level Two over IP" 1 January 1999 (1999-01-01) , IETF - INTERNET ENGINEERING TASK FORCE , SIGTRAN XP002262066 * the whole document *

## Description

### Technical Field

The present invention relates to methods and systems for communicating SS7 messages over a packet-based network. More particularly, the present invention relates to methods and systems for communicating SS7 messages over a packet-based network using a transport adapter layer interface.

### Background Art

The traditional public switched telephone network (PSTN) consists of signaling nodes connected via dedicated signaling system 7 (SS7) signaling links. The three primary types of signaling nodes in the conventional PSTN network are service switching points (SSPs), signal transfer points (STPs), and service control points (SCPs). Service switching points are end office switches that handle both voice and data traffic. Signal transfer points are switching nodes that route SS7 messages between SS7 signaling points. Service control points are databases and associated computers that provide data in response to SS7 queries. Examples of such data include billing information, 800 number translation information, and number portability information.

These conventional SS7 nodes have typically communicated by sending SS7 messages to each other over dedicated SS7 signaling links. While such signaling links provide a highly reliable means for communicating SS7 traffic, SS7 signaling links provide only fixed bandwidth to a user regardless of the user's needs. As a result, users must install or lease sufficient call signaling bandwidth to handle peak or worst-case traffic conditions. Installing or leasing sufficient call signaling bandwidth for peak conditions is inefficient since peak conditions rarely occur. Moreover, because SS7 call signaling bandwidth is expensive, there exists a need for an alternative to dedicated SS7 signaling links.

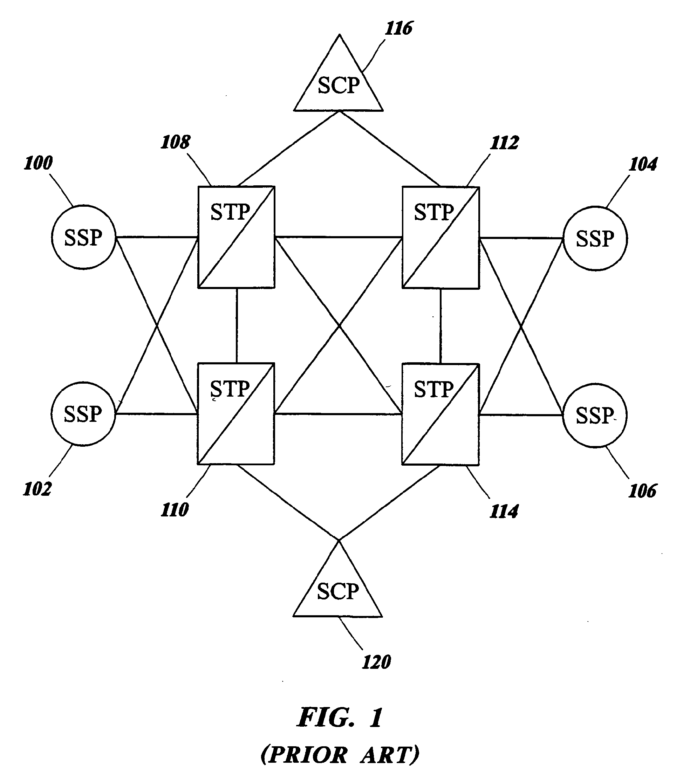

Figure 1 is a block diagram of the conventional PSTN network. In Figure 1, SSPs **100** and **102** communicate with SSPs **104** and **106** through STPs **108, 110, 112,** and **114.** SCP database nodes **116** and **120** provide data in response to queries from SSPs **100, 102, 104** and **106** and/or from STPs **108, 110, 112,** and **114.** All of the lines interconnecting the nodes in Figure 1 represent conventional SS7 signaling links. As stated above, such links are often under-utilized and are expensive to install or lease.

In packet-based networks, such as transmission control protocol/Internet protocol (TCP/IP) networks, bandwidth can be shared among multiple users. In addition, the growth and popularity of the global Internet have made components for such networks readily available and cost efficient. However, integrating the traditional PSTN network with a packet-based network, such as a TCP/IP network, creates a number of problems.

For example, one problem with sending traditional call signaling traffic over a TCP/IP network is that in a TCP/IP network, transmissions between a sender and a receiver are stream-oriented. That is, TCP software on a sending machine is not guaranteed to send data in the same boundaries defined by a sending application. The amount of data sent over a TCP connection depends on the window size advertised by the receiver, the number of bytes of data that have been acknowledged by the receiver, and the maximum segment size of the physical network connecting the sender and the receiver. Accordingly, the receiving application may not receive data in the same boundaries created by the sending application. Thus, when sending call signaling messages over a TCP/IP network, several messages may be combined in one TCP segment. Alternatively, a single call signaling message may be divided among multiple TCP segments. In conventional networks, it is the job of the receiving application to parse the incoming data stream and extract the individual packets. Such parsing is difficult and increases the complexity of application programs that utilize TCP.

Another problem with sending conventional call signaling messages over a TCP/IP connection is that the timeout period for disabling a connection in TCP is too long for call signaling applications. For example, some implementations of TCP include a keep-alive timer. The keep-alive timer is reset every time a TCP segment is received. When the timer expires, it causes one side of the connection to determine if the other side is still operating. No mechanism is specified in the TCP protocol specifications for determining whether the other side is operating. In addition, the timeout period for the keep-alive timer is on the order of minutes. Thus, one side of a connection could go down and the other side could wait for minutes before resetting the connection. Such a long timeout period wastes resources on the machine that is waiting for data from the other side and is unsuitable for telephony applications.

Yet another problem with integrating conventional telephony and packet-based networks, such as TCP/IP networks, is that TCP/IP requires lengthy handshake procedures for connection establishment and termination. For example, in order to establish a TCP connection, a client application sends a synchronization (SYN) packet to a server application. The server application then sends an acknowledgement (ACK) and a SYN back to the client. The client then sends an acknowledgement to the SYN + ACK from the server. During the initial exchange of SYN and ACK messages, the client and server exchange sequence numbers. Once the client sends acknowledgement to the SYN + ACK to the server, the TCP software on the client machine is in an open state in which data can be received from the server and data from the sending application can be sent to the server.

In order to terminate a TCP connection, when an application closes a connection, the TCP software associated with that application sends a FIN packet to the TCP software on the other side of the connection. The TCP software of the machine that receives the FIN sends an ACK to the FIN and informs the application that a FIN has been received. If the application is finished sending data, the application closes the connection. In response to the application close, the TCP software sends a FIN to the TCP software that sent the original FIN. In response to receiving the FIN, the TCP software sends an ACK. Once this ACK is sent, the connection is considered to be closed by both sides of the connection.

While TCP connection establishment and termination procedures have proven to be reliable and account for a variety of error conditions, such procedures are cumbersome and require many round trip times in order to complete. For example, in TCP connection establishment, a minimum of 1.5 round trip times is required. In the TCP connection termination scenario described above, at least two round trip times are required. In addition, TCP software on both sides of the connection is required to maintain state and perform additional processing during connection establishment and termination.

For all of these reasons, the number of occurrences of TCP connection establishment and termination procedures should be minimized. For example, if it is desired to upgrade software in a telephony device that currently communicates with a remote device over a TCP connection, the connection must be terminated. Connection termination requires the handshaking procedure discussed above. Once the software is upgraded, the connection must be reestablished. Connection reestablishment requires the three-way handshaking procedure described above. Thus, performing a software upgrade requires an initial TCP connection establishment, a TCP connection termination, followed by another TCP connection establishment. These procedures waste resources and should be minimized, especially in high-traffic telecommunications switches.

In light of all these difficulties associated with integrating conventional telephony networks, such as SS7 networks, and stream-oriented packet-based networks, such as TCP networks, there exists a need for novel methods and systems for integrating these networks that avoid at least some of the difficulties associated with the prior art.

### Disclosure of the Invention

The present invention includes methods and systems for communicating SS7 messages between signaling nodes over a packet-based network using a transport adapter layer interface. As used herein, the phrase transport adapter layer interface refers to an interface that resides above the transport layer in the TCP protocol stack that facilitates integration between the SS7 protocol stack and the TCP/IP protocol stack. Such an interface includes functionality for prohibiting and allowing communications over a socket without invoking conventional TCP connection establishment and termination handshaking procedures. In addition, the interface provides monitor and test messages that are respectively used to measure performance and test the status of a connection. The interface also provides a mechanism for encapsulating SS7 messages that allows individual message identification over a stream-oriented connection.

Embodiments of the invention will be described below as modules, layers, or processes for implementing SS7 and IP communications functions. It is understood that these modules, layers, or processes can be implemented as hardware, software, or a combination of hardware and software. For example, transport adapter layer interface functionality is described below as a process implemented on a data communications module. The data communications module may include hardware, such as a microprocessor and associated memory, for executing and storing programs. The TALI process may be executed by the microprocessor to perform the TALI functions described below.

Accordingly, it is an object of the invention to provide novel methods and systems for communicating SS7 messages over a stream-oriented packet-based network that avoids the problems with conventional stream-oriented packet-based networks.

It is another object of the invention to provide methods and systems for allowing and prohibiting service data communications over a stream-oriented connection without invoking a TCP handshaking procedure.

It is yet another object of the invention to provide methods and systems for identifying message packets received over a stream-oriented connection.

Some of the objects of the invention having been stated hereinabove, other objects will be evident as the description proceeds, when taken in connection with the accompanying drawings as best described hereinbelow.

### Brief Description of the Drawings

Preferred embodiments of the invention will now be described with reference to the accompanying drawings of which:
Figure 1 is a block diagram illustrating the conventional PSTN network;
Figure 2 is a block diagram of an exemplary operating environment for embodiments of the present invention;
Figure 3 is a block diagram of a signaling gateway capable of sending SS7 messages over a packet-based network using a transport adapter layer interface according to an embodiment of the present invention;
Figures 4(a) and 4(b) are block diagrams illustrating the relationships between the SS7 and IP protocol stacks and methods for integrating the protocol stacks using a transport adapter layer interface according to embodiments of the present invention;
Figure 5 is a block diagram illustrating an exemplary packet structure for encapsulating of SCCP messages using a transport adapter layer interface according to an embodiment of the present invention;
Figure 6 is a flowchart illustrating exemplary steps that may be performed by a signaling gateway in encapsulating SCCP messages using a transport adapter layer interface according to an embodiment of the present invention;
Figure 7 is a block diagram illustrating an exemplary packet structure for encapsulating MTP3 messages using a transport adapter layer interface according to an embodiment of the present invention;
Figure 8 is a block diagram illustrating an exemplary packet structure for encapsulating SS7 messages using an ATM adaption layer and a transport adapter layer interface according to an embodiment of the present invention;
Figure 9 is a flowchart illustrating exemplary steps for identifying individual message packets received over a stream-oriented connection according to an embodiment of the present invention;
Figure 10 is a flowchart illustrating exemplary steps for monitoring connection status using transport adapter layer interface messages according to an embodiment of the present invention;
Figure 11 is a flowchart illustrating exemplary steps for allowing and prohibiting communications using a transport adapter layer interface according to embodiments of the present invention; and
Figure 12 is a flowchart illustrating exemplary steps for measuring round trip time using transport adapter layer interface messages according to an embodiment of the present invention.

### Detailed Description of the Invention

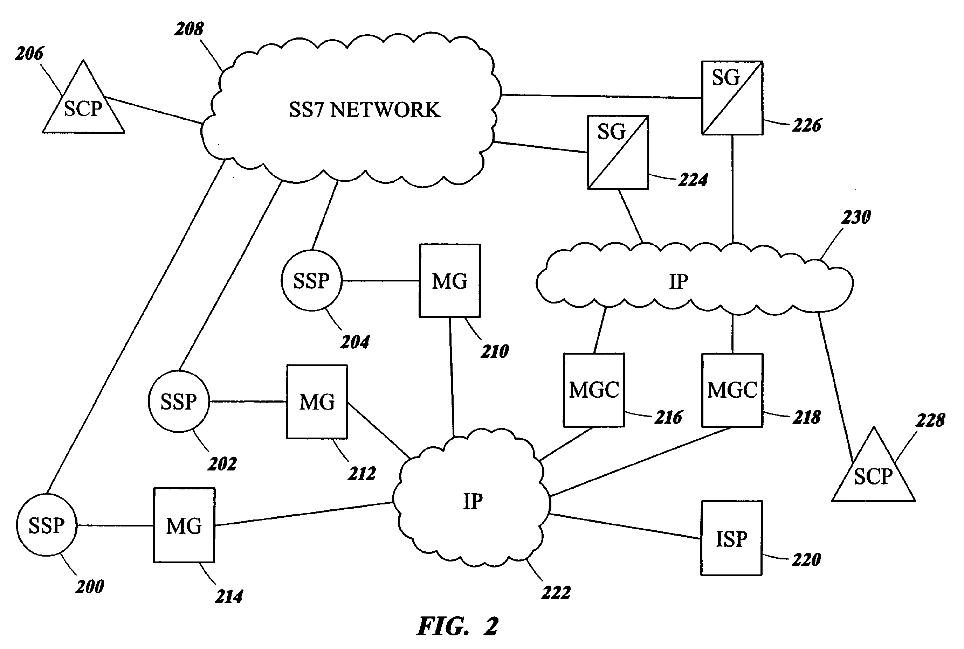

Figure 2 illustrates an exemplary operating environment for embodiments of the present invention. In Figure 2, conventional SS7 network elements, such as SSPs **200, 202,** and **204** and SCP **206,** communicate with each other over SS7 network **208.** IP nodes, such as media gateways (MGs) **210, 212**, and **214**, media gateway controllers (MGCs) **216** and **218** and Internet service provider (ISP) **220,** communicate with each other over first packet-based network **222**. Similarly, signaling gateways **224** and **226** communicate with MGCs **216** and **218** and with SCP **228** via second packet-based network **230**. First and second packet-based networks **222** and **230** may each comprise IP networks. Moreover, first and second packet-based networks **222** and **230** may be the same logical network. The reason that networks **222** and **230** are illustrated separately in Figure 2 is that first packet-based network **222** carries packetized media stream communications between MGs, and media control information between MGCs and MGs, and second packet-based network **230** carries call signaling traffic to and from SGs **224** and **226**.

The conventional SS7 network elements, such as SSPs and SCPs, are described in detail above. Hence a description thereof will not be repeated herein. The additional network elements illustrated in Figure 2 include media gateways **210, 212**, and **214**, media gateway controllers **216** and **218,** signaling gateways **224,** and **226,** and Internet service provider (ISP) **220.** Media gateways **210, 212,** and **214** encapsulate media stream communications, such as audio, video, and data, in IP packets to be transmitted over first packet-based network **222**. An example of a protocol used to send media stream communications over a packet-based network is the real time protocol (RTP) as defined in RFC 1889, RTP: A Transport Protocol for Real Time Applications, Jacobson et al., January 1996.

MGCs **216** and **218** control MGs **210, 212**, and **214** using a control protocol. An example of a control protocol that may be implemented by MGCs **216** and **218** is the media gateway control protocol as described in Media Gateway Control Protocol (MGCP), http://search.ietf.orglinternet-drafts/draft-huitema-mejaco-mgcp-v0r1-05.txt, February 21, 1999. ISP **220** provides Internet services to subscribers. Accordingly, ISP **220** may include a network access server to provide user access to the Internet.

Signaling gateways **224** and **226** implement an interface between SS7 network **208** and second packet-based network **230.** In a preferred embodiment of the invention, signaling gateways **224** and **226** provide a transport adapter layer interface to allow conventional network elements, such as SSPs **200, 202,** and **204,** to communicate with IP network elements, such as MGCs **216** and **218**. However, the transport adapter layer interface is not limited to communications between SSPs and MGCs. For example, the transport adapter layer interface according to embodiments of the present invention may also be used to communicate call signaling messages to IP-based SCPs, such as SCP **228** and other devices equipped with an IP interface.

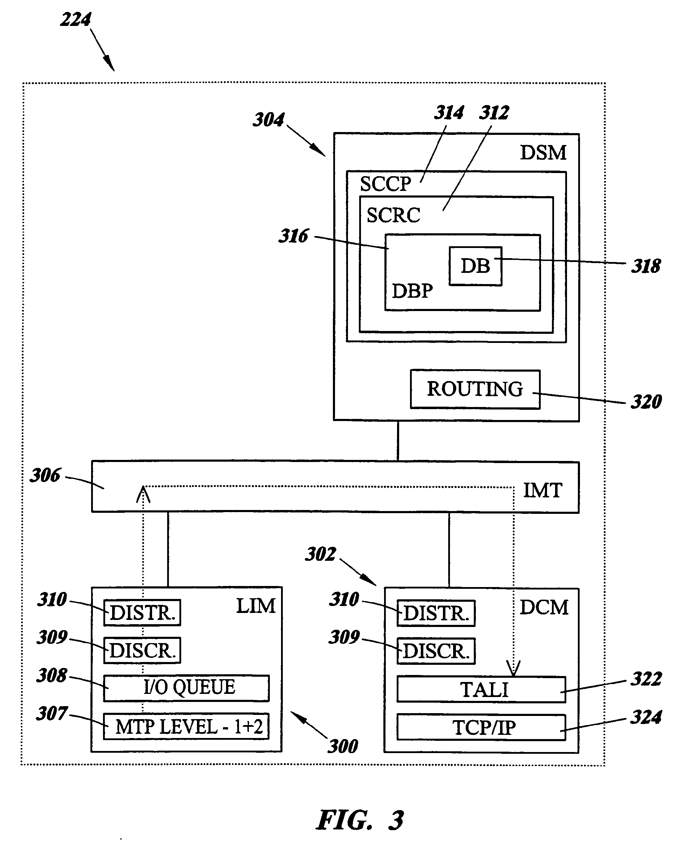

Figure 3 is a block diagram illustrating a signaling gateway for implementing transport adapter layer interface functionality according to an embodiment of the present invention. In Figure 3, signaling gateway **224** includes SS7 link interface module (LIM) **300** for sending and receiving SS7 messages over an SS7 network and data communications module (DCM) **302** for sending and receiving SS7 messages over one or more stream-oriented connections. Signaling gateway **224** may also include additional modules, such as database service module (DSM) **304**, for providing SCCP and database services. Modules **300, 302** and **304** are connected by an interprocessor message transport (IMT) bus **306**. IMT bus **306** is preferably a dual ring counter rotating bus for increased reliability.

Link interface module **300** includes a number of processes for sending and receiving SS7 messages over SS7 links. In the illustrated embodiment, link interface module **300** includes MTP level 1 and 2 process **307** for performing SS7 layer 1 and 2 processing of incoming messages. I/O queue **308** enqueues incoming and outgoing SS7 messages. Message discrimination process **309** determines whether incoming messages are addressed to signaling gateway **224** or to another node. For example, message discrimination process **309** may analyze the SS7 destination point code in an incoming message to determine whether the message is addressed to signaling gateway **224** or to another node. If message discrimination process **309** determines that the message is addressed to signaling gateway **224**, message discrimination process **309** forwards the message to message distribution process **310**. Message distribution process **310** routes the message to another internal module for further processing.

DSM **304** provides database and SCCP service for SS7 messages. Accordingly, DSM **304** may include signaling connection routing control (SCRC) and SCCP processes **312** and **314** for interpreting SCCP layer information of incoming messages and routing the messages to database process **316.** Database process **316** may perform a lookup in database **318** to obtain routing or other information for an incoming message. For example, database **318** may be a number portability database, a circuit identification code routing database, a billing code database, or other database for performing routing or other functionality. Routing process **320** routes the message to the appropriate module for outgoing processing based on MTP layer 3 information in the message.

DCM **302** includes transport adapter layer interface process **322** for performing transport adapter layer interface functionality. Such functionality includes encapsulating SS7 messages in a transport adapter layer interface packet to be sent over a stream-oriented connection, allowing and prohibiting communication over a stream-oriented connection, monitoring the other end of the stream-oriented connection, etc. DCM **302** preferably also includes a stream-oriented communication process such as TCP/IP process **324.** TCP/IP process **324** performs conventional TCP/IP protocol stack functions. Such functions include reliable delivery of TCP/IP packets, flow control, packet sequencing, and other stream-oriented transport functionality.

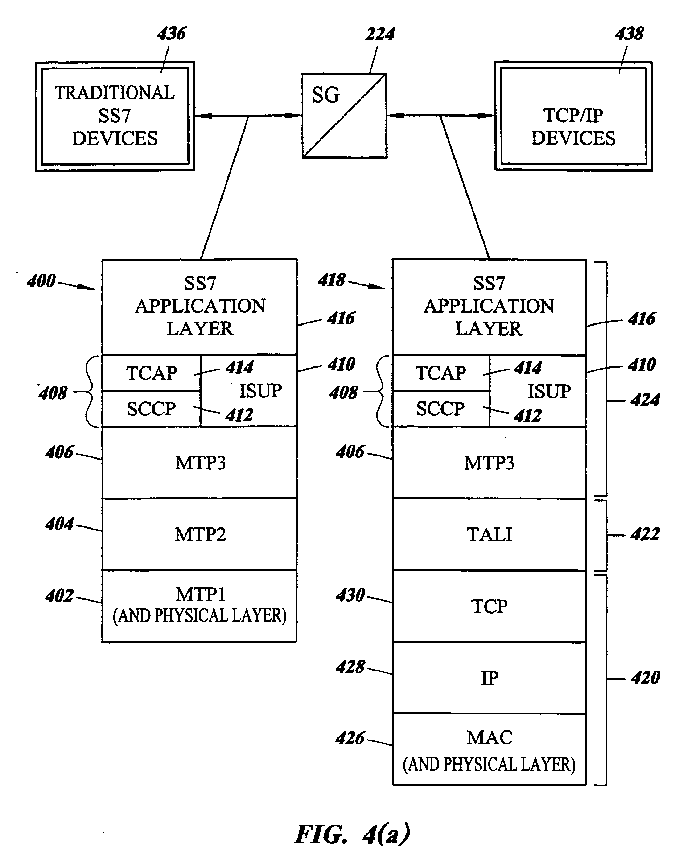

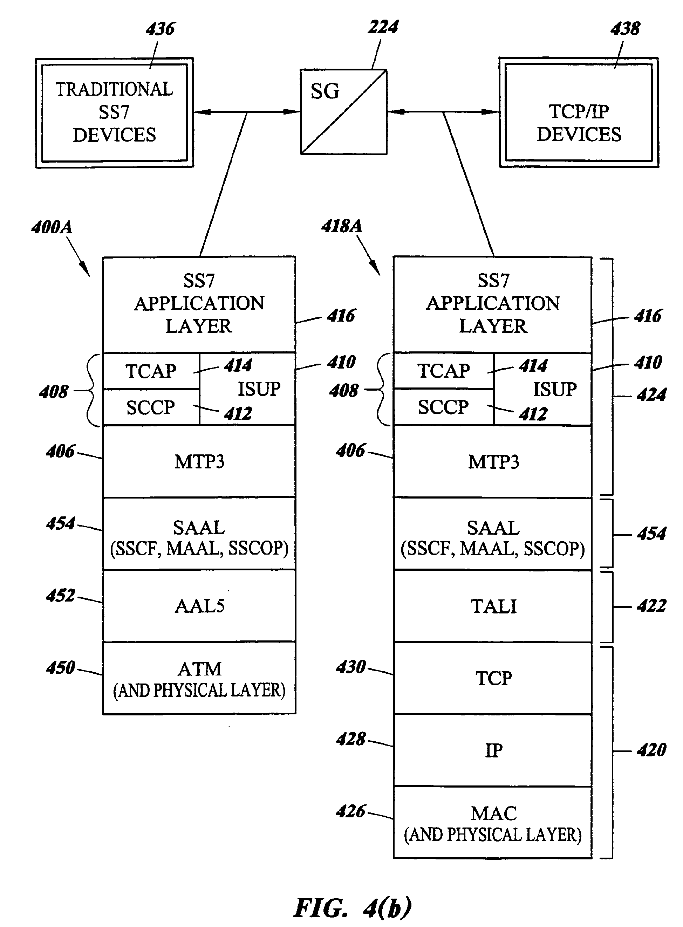

Figure 4(a) is a block diagram illustrating the relationships between the SS7 protocol stack and the transport adapter layer interface protocol stack according to an embodiment of the present invention. In Figure 4, SS7 protocol stack **400** includes MTP layer 1 **402**, MTP layer 2 **404**, and MTP layer 3 **406**. MTP layer 1 **402**, also referred to as the physical layer, communicates with hardware to send and receive data over a physical medium. MTP layer 2 **404,** referred to as the data link layer, provides error correction/detection and properly sequenced delivery of SS7 message packets. MTP layer 3 **406**, also referred to as the network layer, is responsible for SS7 message routing, message discrimination, and message distribution.

Residing above MTPs layers 1 - 3 is the user parts and application parts layer **408**. User parts and application parts layer **408** is divided into ISDN user part (ISUP) layer **410**, signaling connection control part (SCCP) layer **412** and transaction capabilities application part (TCAP) layer **414**. ISDN user part layer **410** performs SS7 call setup and call teardown functions. SCCP layer **412** performs signaling connection control part functions, such as database subsystem addressing. TCAP layer **414** is used for database transactions, such as 800 number translations, number portability transactions, and billing transactions. Finally, SS7 application layer **416** can perform any function that uses the underlying services provided by SS7. Examples of such applications include billing applications, network monitoring applications, etc.

TALI protocol stack **418** includes IP protocol stack portion **420,** TALI portion **422,** and SS7 portion **424.** IP protocol stack portion **420** includes a physical and MAC layer **426**, a network layer **428**, and a transport layer **430**. Physical and MAC layer **426** interfaces with network hardware for communication between connected machines and transports network frames between machines connected to the same network. Network layer **428** handles routing and addressing of datagrams between different physical networks. In a preferred embodiment of the invention, network layer **428** performs addressing and routing functions according to the Internet protocol, such as Internet protocol version 4 or Internet protocol version 6. Transport layer **430** provides communication between application programs. In a preferred embodiment of the present invention, transport layer **430** includes stream-oriented transport software, such as TCP software, for implementing reliable stream-oriented transport between applications.

It should be noted that although TALI protocol stack **418** illustrated in Figure 4(a) includes MTP3 layer **406**, MTP layer 3 functionality, other than processing point codes, is optional and may be omitted from TALI protocol stack **418**.

According to an important aspect of the present invention, transport adapter layer interface portion **422** includes functions and packet structures that facilitate interoperability between the SS7 and TCP protocols. For example, transport adapter layer interface portion **422** includes packet structures that facilitate extraction of SS7 packets from a TCP data stream, commands for allowing and prohibiting connections without invoking TCP connection establishment and termination procedures, monitor messages for measuring round trip time, and test messages for determining whether a TCP connection is enabled or disabled. Each of these functions will be discussed in more detail below.

Traditional SS7 devices **436,** such as SSPs, STPs, and SCPs, communicate with signaling gateway **224** using SS7 protocol stack **400**. TCP/IP devices **438,** such as MGCs and IP-based SCPs, communicate with signaling gateway **224** using TALI protocol stack **418.** Accordingly, signaling gateway **224** preferably includes software for implementing both SS7 protocol stack **400** and TALI protocol stack **418.**

As illustrated in Figure 3, SS7 protocol stack **400** may be implemented by or on LIM **300** and TALI protocol stack **418** may be implemented by or on DCM **302**. However, the present invention is not limited to such an implementation. For example, in an alternative embodiment of the invention, SS7 protocol stack **400** and TALI protocol stack **418** may be implemented on a single card or module within signaling gateway **224** or in another node in which SS7 and IP communication capability is desirable.

Figure 4(b) is a block diagram illustrating an alternative implementation of the TALI protocol stack according to an embodiment of the present invention. In Figure 4(b), SS7 protocol stack **400a** includes MTP3, SCCP, TCAP, ISUP, and application layers **406, 412, 414,** and **416** that are identical to the correspondingly numbered layers described with respect to Figure 4(a). However, in Figure 4(b) MTP layers 1 and 2 are replaced by asynchronous transport mode (ATM) layer **450**, ATM adaption layer 5 **452**, and signaling ATM adaption layer **454**. Layers **450, 452**, and **454** perform functions for transmitting SS7 traffic over a broadband network, such as an ATM network.

TALI protocol stack **418a** includes MAC, network, transport, TALI, and SS7 layers **426, 428, 430, 422,** and **424,** that are identical to the correspondingly numbered layers described with respect to Figure 4(a). However, TALI protocol stack **418a** includes signaling ATM adaption layer (SAAL) **454** to provide sequencing of SS7 data transferred across a TCP/IP connection. When TALI protocol stack **418a** is implemented without SAAL layer **454**, as illustrated in Figure 4(a), the SS7 sequence number, which is included in the SS7 MTP2 header, is not transferred across a TCP/IP connection. This sequence number is used to preserve message sequencing and to support complex SS7 procedures involving MSU retrieval during link changeover and changeback. Changeover is an SS7 procedure whereby a link request is sent over one SS7 link to move SS7 traffic from that link to another SS7 link. Changeback is an SS7 procedure for moving the SS7 traffic back to the original link. TALI protocol stack **418** illustrated in Figure 4(a) without SAAL layer **454** still guarantees correct sequencing of SS7 data because TCP layer **430** provides sequencing of TCP segments that carry the SS7 traffic.

When TALI protocol stack **418a** is implemented with SAAL layer **454**, the sequence number of the SS7 MSU is part of the data transferred across a TCP/IP connection. This sequence number may be included as a header, a trailer, or in any other portion of a transport adapter layer interface packet. In the illustrated example, the sequence number is a 24-bit value included in a service specific connection oriented protocol (SSCOP) trailer provided by SAAL layer **454**. This 24-bit sequence number serves the same purpose as the 8-bit SS7 sequence number. Accordingly, TALI protocol stack **418a** illustrated in Figure 4(b) can be used for SS7 changeover and changeback with data retrieval and can minimize MSU loss when SS7 links are deactivated.

### SCCP Encapsulation Using TALI

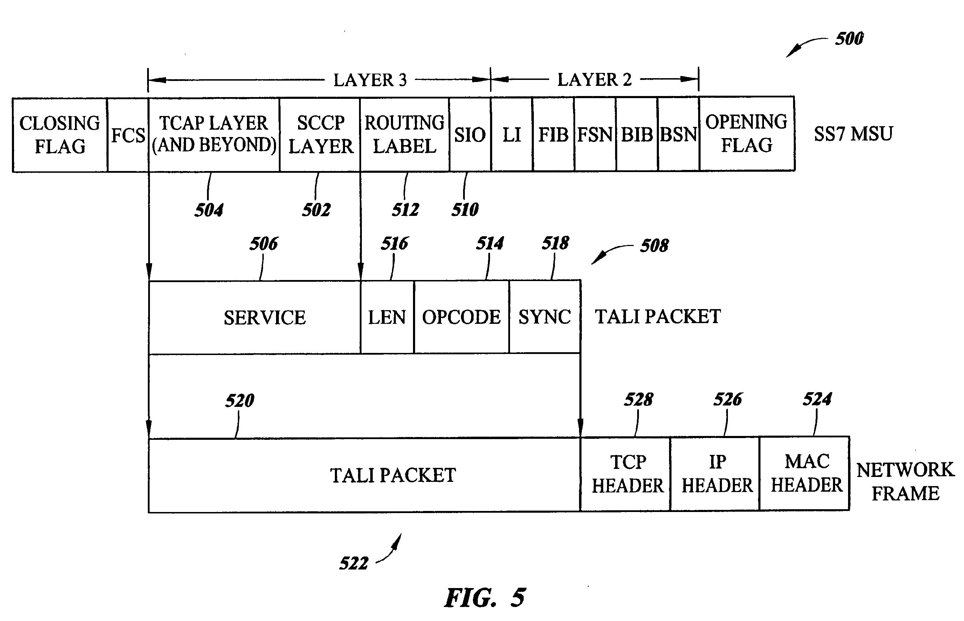

Figure 5 illustrates a packet structure for encapsulating SCCP MSUs in IP packets using the transport adapter layer interface according to an embodiment of the present invention. In Figure 5, SS7 MSU **500** includes SCCP layer information **502** and TCAP layer information **504** that are encapsulated in service portion **506** of TALI packet **508.** SS7 MSU **500** also includes service indicator octet **510** and routing label **512.** In one embodiment of the invention, service indicator octet 510 and routing label **512** may be encapsulated directly in service portion **506** of TALI packet **508.** However, in the illustrated embodiment, service indicator octet **510** and routing label **512** are omitted from TALI packet **508.** Omitting the service indicator octet and routing label information from the TALI packet simplifies processing by the receiving TALI process.

Rather than encapsulating service indicator octet **510** and routing label **512** directly in service field **506** of TALI packet **508,** TALI protocol software according to embodiments of the present invention may store information from SIO **510** and routing label **512** in other information fields. For example, the destination point code from routing label **512** may be stored in the SCCP called party point code field of SCCP layer **502**. Similarly, the originating point code from routing label **512** may be stored in the SCCP calling party point code field of routing label **512**. Message type identification information from SIO **510** may be merged to OPCODE field **514** of TALI packet **508.** For example, OPCODE field **514** may store information for identifying the message type. In the illustrated embodiment, OPCODE field **514** may be set to a predetermined value for identifying the message as an SCCP message. The remaining fields of SS7 MSU **500** are preferably omitted from TALI packet **508.** That is, SS7 layer 2 information, opening flags, closing flags, and frame check sequences are preferably omitted from TALI packet **508**. This information can be omitted because the TCP/IP protocol stack provides analogous functions to SS7 layers 1 and 2. Omitting SS7 layers 1 and 2 from TALI packet **508** decreases overhead for sending packets over a network.

In addition to service field **506** and OPCODE field **514,** TALI packet **508** also includes LENGTH field **516** and SYNC field **518**. LENGTH field **516** specifies the length of the service portion of the data packet. SYNC field **518** contains a predetermined bit sequence for identifying the start of TALI packet **508**. LENGTH field **516** and SYNC field **518** may be used by receiving TALI protocol software to extract individual TALI packets from a stream-oriented connection. Thus, the TALI packet structure in Figure 5 solves the problem of receiving data over a stream-oriented communication and delivers individual TALI packets to an application. This simplifies application design, as will be discussed in more detail below.

TALI packet **508** is encapsulated in data portion **520** of network frame **522**. Network frame **522** may be any suitable frame for delivering packets to machines connected to the same network. For example, network frame **522** may be an Ethernet frame. Accordingly, network frame **522** includes a mediated access control (MAC) header **524.** IP header **526** follows MAC header **524.** Finally, TCP header **528** follows IP header **526.** The structure of headers **524, 526,** and **528** is known to those of ordinary skill in the art and need not be described herein.

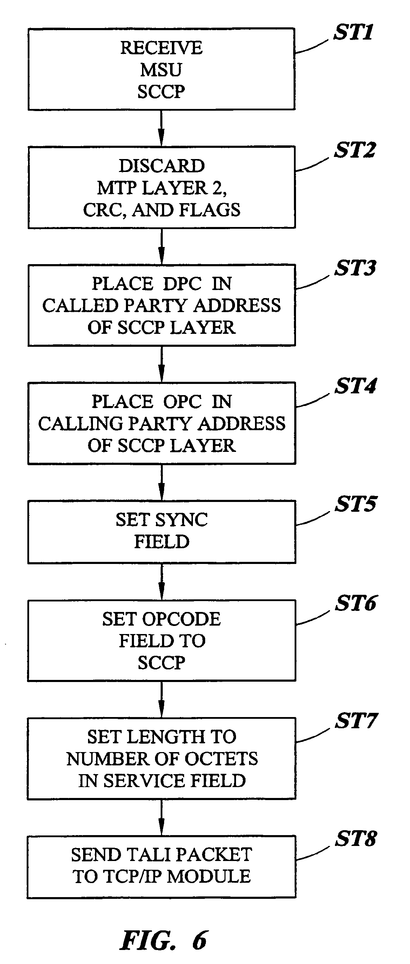

Figure 6 is a flowchart illustrating exemplary steps that may be performed by TALI process **322** illustrated in Figure 3 for performing TALI encapsulation of an SCCP MSU. In Figure 6, in step **ST1,** TALI process **322** receives an SS7 MSU. The SS7 MSU may originate from an SS7 node, such as an SSP. In step **ST2,** TALI process **322** discards MTP layer 2 information, SRC, and flags from the SCCP MSU. In step **ST3,** TALI process **322** places the destination point code from the routing layer into the called party address field of the SCCP layer. In step **ST4,** TALI process **322** places the originating point code from the routing label in the calling party address field of the SCCP layer. It is understood that steps **ST3** and **ST4** are optional and can be omitted if the entire MTP3 portion of the SCCP MSU is encapsulated in the service portion of the TALI packet.

In step **ST5,** TALI process **322** sets the SYNC field in the header of the TALI packet to indicate the beginning of the TALI packet. In **ST6,** TALI process **322** sets the OPCODE field of the TALI packet to SCCP. In step **ST7,** TALI process **322** sets the LENGTH field is set to the number of octets in the service field of the TALI packet. Finally, in step **ST8,** TALI process **322** sends the packet to TCP/IP process **324** for TCP/IP encapsulation and transmission to an external node.

The steps for processing an incoming TALI packet are essentially the reverse of the steps illustrated in Figure 6. Novel steps for processing incoming TALI packets will be discussed in more detail below in the section entitled "Identifying Individual Message Packets Received Over Stream-Oriented Connection."

### MTP3 Encapsulation Using TALI

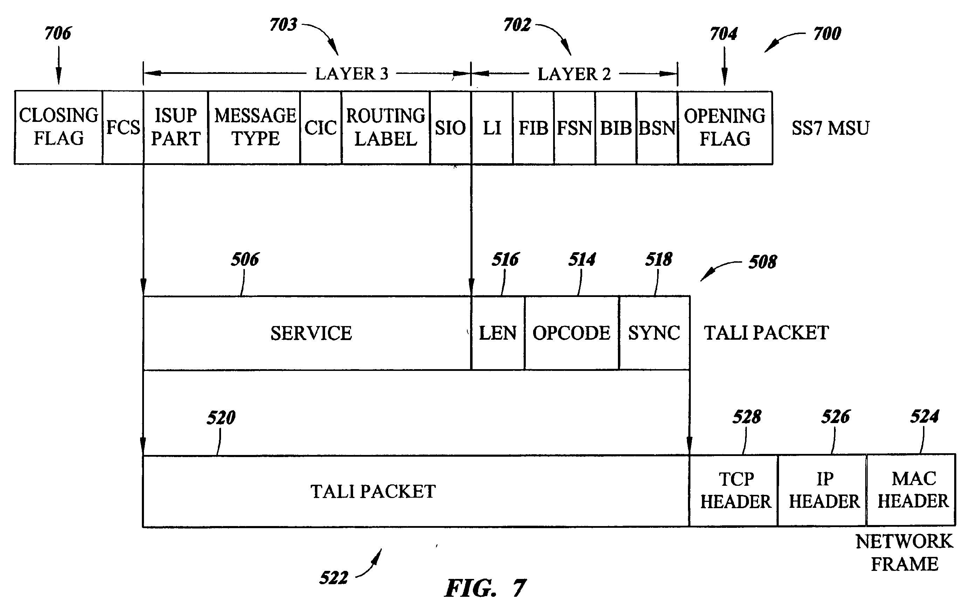

Figure 7 is a block diagram illustrating an exemplary packet structure for encapsulating MTP3 messages in IP packets according to a preferred embodiment of the present invention. As used herein, an MTP3 message is an SS7 message that is not an SCCP or an ISUP message. These messages correspond to service indicator values of 0 - 2, 4, and 6 - 15. In Figure 7, SS7 MSU **700** includes layer 2 **702**, layer 3 **703**, and opening and closing information **704** and **706**. Unlike the example illustrated in Figure 5, in this example, all of layer 3 information is encapsulated in service portion **506** of TALI packet **508.** Like the example illustrated in Figure 5, layer 2 information **702,** and opening and closing information **704** and **706** are preferably discarded.

In TALI packet **508**, LENGTH field **516** is set to the length of service portion 506. OPCODE field **514** is set to a predetermined value for identifying an MTP3 packet. SYNC field **518** is set to a predetermined value for identifying the start of TALI packet **508.** TALI packet **508** is encapsulated in network frame **522** in the same manner described above with respect to Figure 5. Thus, the present invention provides a method for encapsulating MTP3 messages other than ISUP and SCCP messages in network frames using a transport adapter layer interface.

### SAAL Encapsulation Using TALI

As illustrated above with regard to Figure 4(b), one embodiment of the transport adapter layer interface protocol stack includes a SAAL layer. TALI also provides a corresponding SAAL OPCODE that indicates that a SAAL message is being transported. This OPCODE may be used to transport any type of SS7 message, including ISUP messages, SCCP messages, and MTP3 messages that includes SAAL information. In addition, the SAAL OPCODE may be used to transport non-SS7 messages, such as SAAL peer-to-peer messages.

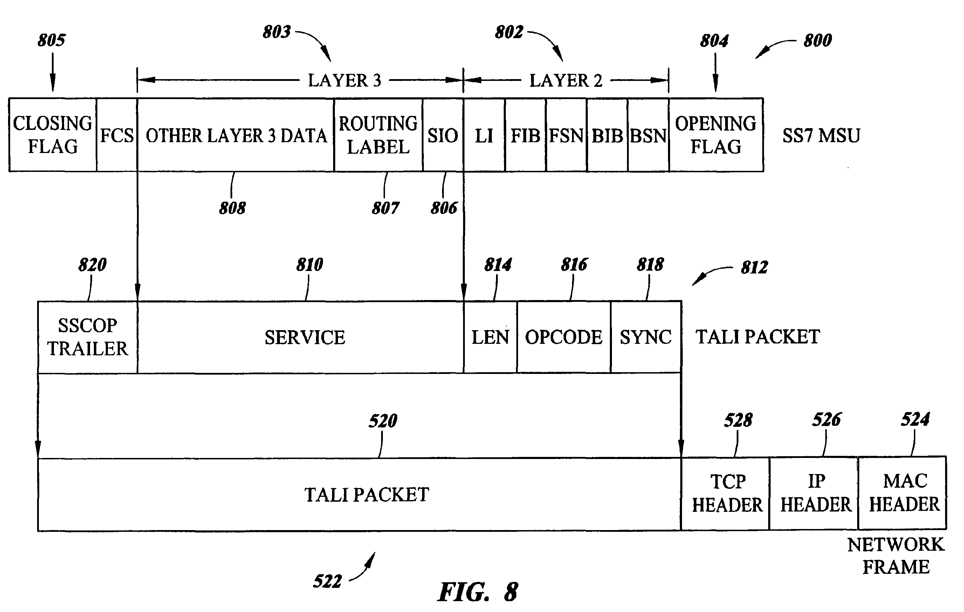

Figure 8 illustrates encapsulation of SAAL messages using a transport adapter layer interface according to an embodiment of the present invention. In Figure 8, SS7 MSU **800** includes layer 2 and layer 3 portions **802** and **803** and opening and closing portions **804** and **805**, as previously described. Layer 3 portion **802** includes an SIO value **806**, a routing label **807,** and other layer 3 information **808.** Other layer 3 information **808** can include ISUP information, application part information, or MTP3 information, as previously described. In the illustrated embodiment, all of layer 3 information **803** is encapsulated in service portion **810** of TALI packet **812.**

TALI packet **812** includes LENGTH field **814,** OPCODE field **816,** and SYNC field **818.** In addition, TALI packet **812** includes SSCOP trailer **820.** LENGTH field **814** specifies the number of octets in service portion **810**, OPCODE field **816** is set to a predetermined value for identifying TALI packet **812** as a SAAL packet, and SYNC field **818** is set to a predetermined value for indicating the beginning of TALI packet **812**. SSCOP trailer **820** contains a sequence number for sequencing TALI service data packets when a TCP/IP link fails. TALI packet **812** is encapsulated in network frame **522** in the manner described above. SAAL decapsulation can occur in a manner similar to that described above with respect to Figure 6 if service portion **810** of TALI packet **812** contains an SS7 MSU. If service portion **810** of TALI packet **812** contains a SAAL peer-to-peer message, decapsulation may be performed by the SAAL layer, rather than the TALI layer.

### TALI State Machine

Table 1 shown below is a state machine for the TALI protocol. In Table, 1, columns represent protocol states and the rows represent events that may or may not cause transitions between protocol states. Blank cells in the table indicate that no action occurs for a given state in response to a given event. Cells with text indicate functions performed by TALI protocol implementations and state transitions that occur in response to events.

The states in the TALI protocol are: out-of-service (OOS), connecting, near end prohibited - far end prohibited (NEP-FEP), near end prohibited - far end allowed (NEP-FEA), near end allowed - far end prohibited (NEA-FEP), and near end allowed - far end allowed (NEA-FEA). In the out of service state, a TCP connection has either not been established or has been disabled. In the connecting state, a TCP connection is being established between TCP software associated with TALI endpoints. "Prohibited" refers to a condition in which a TCP connection is established but TALI service messages are not permitted to be sent to the side for which message flow is prohibited. Finally, "allowed" refers to the willingness of one side of a connection to accept TALI service messages. As used herein, TALI service messages are messages that carry application data. TALI messages are messages such as allow, prohibit, monitor, and test, that carry TALI control information. SAAL messages that are not used to carry application data also fall into the TALI messages group. Thus, when in the prohibited state, TALI messages are permitted, while TALI service messages are not permitted.

The events listed in column 1 of Table 1 include timer expirations, receipt of messages, protocol violations, etc. The TALI protocol includes four main timers: T1, T2, T3, and T4. The T1 timer represents the time interval between the origination of a test message at each TALI implementation. Each time T1 expires, a TALI implementation should send a test message. The test message will be discussed in more detail below with regard to monitoring the status of a TALI connection.

The timer T2 represents the amount of time that a TALI implementation has to return an allow or a prohibit message in response to a test message. If the far end of a TALI connection fails to reply with an allow or prohibit message before T2 expires, the sender of the test message treats the T2 message as a protocol violation (PV).

The timer T3 controls the length of time that the near end of the TALI connection should process service data that is received from the far end of a TALI connection after a management prohibit traffic event has occurred at the near end. As used herein, a "management event" is an action performed by an application that resides above and uses the TALI layer. The timer T3 is used when a transition from NEA-FEA (both ends allowed to send service data) to NEP-FEA (only far end willing to send service data) occurs. When an endpoint transitions to the prohibited state, the endpoint is indicating that the endpoint desires to stop receiving service message traffic. That is, if A and B are the endpoints, and endpoint B wishes to not receive service message traffic, then endpoint B sends a prohibit message to endpoint A. After sending the prohibit message, endpoint B receives and processes traffic for T3 seconds. After T3 expires, no service messages are processed by endpoint B. Endpoint A starts diverting traffic to a node other than endpoint B once it receives the prohibit message from endpoint B.

Some data may have been given to the TCP layer at endpoint A for transmission after endpoint B sent the prohibit message but before the prohibit message was received by endpoint A. The application at endpoint A does not have control over messages already given to TCP. If endpoint B did not wait some amount of time, then endpoint B would discard valid messages. Endpoint A would stop passing data to the TCP layer once it has received the prohibit message.

The T4 timer represents the time interval between the origination of the monitor message. Each time T4 expires, the TALI implementation should send a monitor message. The use of monitor messages to measure the round trip time of a connection will be discussed in more detail below.

Other messages illustrated in the events column of Table 1 are special (spcl) messages and extended service (xsrv) messages. Extended service messages are use to transport types of service traffic other than those described above. Special messages are vendor specific messages used to provide services other than those provided by TALI.

Another feature of the invention illustrated in Table 1 is the use of monitor messages to identify the TALI software version of the far end of a TALI connection. For example, according to Table 1, when an implementation receives a monitor message in any state except out of service or connecting, the implementation updates the TALI version of the far end of the connection. Exemplary fields in the monitor message used to identify TALI version will be discussed in more detail below.

The following description illustrates an exemplary path through the state machine illustrated in Table 1. First, TCP software associated with a near end TALI implementation may establish a TCP connection with TCP software associated with a far end TALI implementation. During the TCP connection establishment phase, both TALI implementations are in the connecting state. Once a TCP connection is established, both TALI implementations are in the NEP-FEP state, indicating that TALI service messages cannot be sent. When the near end TALI implementation receives an allow message, the state machine switches to the NEP-FEA state. In the NEP-FEA state, the near end TALI implementation will send an allow message when a management allow traffic event occurs. As used herein, the phrase "management allow traffic event" refers to an event that notifies the TALI implementation that service messages can be sent on the socket in question. Once the near end TALI implementation sends an allow message, the state machine transitions to the NEA - FEA state. In the NEA - FEA state, both TALI implementations can send and receive TALI service messages.

**Table 1: TALI State Machine**

| STATE→ | OOS | Connecting | NEP-FEP | NEP-FEA | NEA-FEP | NEA-FEA |
|---|---|---|---|---|---|---|
| EVENT↓ | | | | | | |
| T1 Timer Expired | | | Send test Start T1 Start T2 | Send test Start T1 Start T2 | Send test Start T1 Start T2 | Send test Start T1 Start T2 |
| T2 Timer Expired | | | PV | PV | PV | PV |
| T3 Timer Expired | | | PV | PV | | |
| T4 Timer Expired | | | Send moni Start T4 | Send moni Start T4 | Send moni Start T4 | Send moni Start T4 |
| Received Test Message | | | Send proh | Send proh | Send allo | Send allo |
| Received Allow I Message | | | Stop T2 NEP-FEA | Stop T2 | Stop T2 NEA-FEA | Stop T2. |
| Received Prohibit Message | | | Stop T2. Send proa | Stop T2 Send proa NEP-FEP | Stop T2 Send proa | Stop T2. Flush or re-route data Send proa NEA-FEP |
| Received Prohibit Acknowledg ment Message | | | Stop T3 | Stop T3 | | |
| Received Monitor Message | | | Update 'far end version' based on moni content Convert moni to mona send mona | Update 'far end version' based on moni content Convert moni to mona send mona | Update 'far end version' based on moni content Convert moni to mona send mona | Update 'far end version' based on moni content Convert moni to mona send mona |
| Received Monitor Acknowledg ment Message | | | Implementation dependent processing. | Implementation dependent processing. | Implementation dependent processing. | Implementation dependent processing. |
| Received Service i Message | | | PV | If T3 running Process data Else PV | PV | Process data |
| Received 'mgmt' Message | | | If 'far end version' < 2.0 PV Else Process according to the nodes 2.0 mgmt capabilities. | If 'far end version' < 2.0 PV Else Process according to the nodes 2.0 mgmt capabilities. | if 'far end version' < 2.0 PV Else Process according to the nodes 2.0 mgmt capabilities. | If 'far end version' < 2.0 PV Else Process according to the nodes 2.0 mgmt capabilities. |
| Received 'xsrv' Message | | | If 'far end version' < 2.0 PV Else Process according to the nodes 2.0 xsrv capabilities. | If 'far end version' < 2.0 PV Else Process according to the nodes 2.0 xsrv capabilities. | If 'far end version' < 2.0 PV Else Process according to the nodes 2.0 xsrv capabilities. | If 'far end version' < 2.0 PV Else Process according to the nodes 2.0 xsrv capabilities. |
| Received 'spcl' Message | | | If 'far end version' <2.0 PV Else Process according to the nodes 2.0 spcl capabilities. | If 'far end version' <2.0 PV Else Process according to the nodes 2.0 spcl capabilities. | If 'far end version' <2.0 PV Else Process according to the nodes 2.0 spcl capabilities. | If 'far end version' < 2.0 PV Else Process according to the nodes 2.0 spcl capabilities. |
| Connection Established | | start T1 start T2 start T4 if sock_allowed == TRUE Send moni Send allo Send test NEA_FEP Else Send moni Send proh Send test NEP FEP | | | | |
| Connection Lost | | | PV | PV | PV | PV |
| Protocol Violation | | | Stop all timers Close the socket Connecting | Stop all timers Close the socket Connecting | Stop all timers Close the socket Connecting | Stop all timers Close the socket Connecting |
| Manageme nt Open Socket | Open the socket Connec ting | | | | | |
| Manageme nt Close Socket | | Close the socket OOS | Stop all timers Close the socket OOS | Stop all timers Close the socket COS | Stop all timers Close the socket OOS | Stop all timers Close the socket OOS |
| Manageme nt Prohibit Socket | sock_all owed = FALSE | sock_allowed = FALSE | sock_allowed = FALSE | sock_allowed = FALSE | sock_allowed = FALSE Send proh Start T3 NEP-FEP | sock_allowed = FALSE Send proh Start T3 NEP-FEA |
| Manageme nt Allow Traffic | sock_all owed = TRUE | sock_allowed = TRUE | sock_allowed = TRUE Send allo. NEA-FEP | sock_allowed = TRUE Send allo. NEA-FEA | sock_allowed = TRUE | sock_allowed = TRUE |
| User Part Messages | Reject data | Reject data | Reject data | Reject data | Reject data | Send data |
| Request from higher software layers to send 'mgmt' messages | | | If 'far end version' < 2.0 Ignore/reject Else Process according to the nodes 2.0 mgmt capabilities. | If 'far end version' < 2.0 Ignore/reject Else Process according to the nodes 2.0 mgmt capabilities. | If 'far end version' < 2.0 Ignore/reject else Process according to the nodes 2.0 mgmt capabilities. | If 'far end version' < 2.0 Ignore/reject Else Process according to the nodes 2.0 mgmt capabilities. |
| Request from higher software layers to send 'xsrv' messages | | | If 'far end version' < 2.0 Ignore/reject Else Process according to the nodes 2.0 xsrv capabilities. | If 'far end version' < 2.0 Ignore/reject Else Process according to the nodes 2.0 xsrv capabilities. | If 'far end version' < 2.0 Ignore/reject Else Process according to the nodes 2.0 xsrv capabilities. | If 'far end version' < 2.0 Ignore/reject Else Process according to the nodes 2.0 xsrv capabilities. |
| Request from higher software layers to send 'spcl' | | | If 'far end version' < 2.0 Ignore/reject Else Process according to the nodes 2.0 spcl capabilities. | If 'far end version' < 2.0 Ignore/reject Else Process according to the nodes 2.0 spcl capabilities. | If 'far end version' < 2.0 Ignore/reject Else Process according to the nodes 2.0 spcl capabilities. | If 'far end version' < 2.0 Ignore/reject Else Process according to the nodes 2.0 spcl capabilities. |

### Identifying Individual Message Packets Received over Stream-Oriented Connection

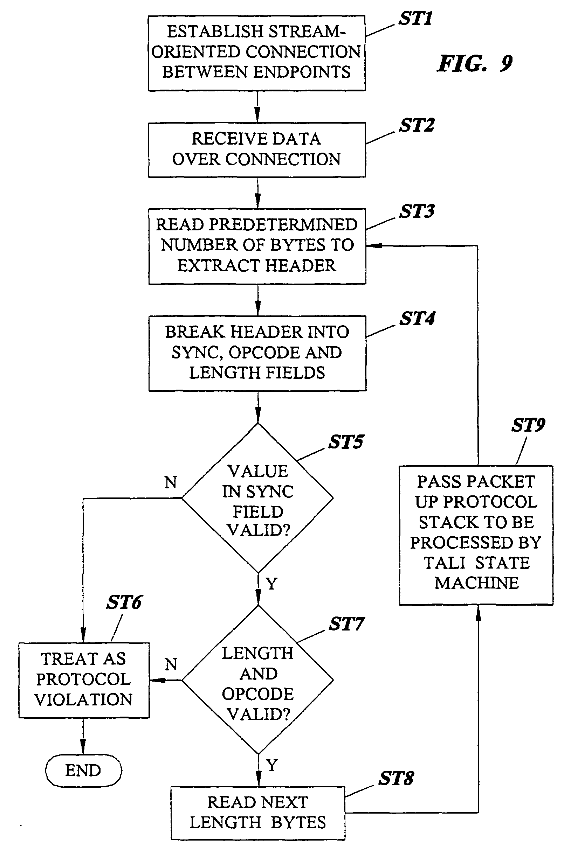

As discussed above, one of the problems associated with receiving data over a stream-oriented connection, such as a TCP connection, is that the packet boundaries created by a sending application may not be preserved by the underlying TCP software. As a result, the receiving application may not receive data in the intended units. The present embodiment solves this problem with regard to TALI packets using the SYNC and LENGTH fields. Figure 9 is a flowchart illustrating exemplary steps that may be performed by TALI process **322** illustrated in Figure 3 for identifying TALI packets received over a stream-oriented connection. In step **ST1,** a stream-oriented connection such as a TCP connection is established between endpoints. The endpoints may be a signaling gateway and a media gateway controller. In step **ST2,** TALI process **322** receives data over the connection. In step **ST3,** TALI process **322** reads a predetermined number of bytes to extract the header from the stream of data received over the connection. The predetermined number of bytes is equal to the size of the header as set by the TALI version. For example, the header may be twenty bytes in length.

In step **ST4,** TALI process **322** breaks the header into SYNC, OPCODE, and LENGTH fields. In step **ST5,** TALI process **322** determines whether the value in the SYNC field is valid. If the value in the SYNC field is not valid, TALI process **322** treats the message as a protocol violation. If TALI process **322** determines that the SYNC field is valid, TALI process **322** may then determine whether the LENGTH and OPCODE fields are valid (step **ST7**). In step **ST8,** TALI process **322** reads the next LENGTH bytes in the data stream after the header. In step **ST9,** TALI process **322** passes the packet up the protocol stack to be processed by the TALI state machine. Once the TALI packet has been passed up the protocol stack, TALI process **322** returns to step **ST3** to read the next data header. Because TALI process **322** uses the SYNC and LENGTH fields to determine packet boundaries, SS7 application design is greatly simplified. There is no need for an SS7 application to be concerned with packet boundaries.

### TALI Peer-To-Peer Messages

TALI peer-to-peer messages are messages that are transmitted by the TALI layer of one side of a stream-oriented connection and that are terminated by the TALI layer of the other side of a stream-oriented connection. The TALI peer-to-peer messages that are described herein include test messages for testing the status of a connection, allow and prohibit messages for allowing and prohibiting communications over a connection without invoking TCP connection establishment or termination procedures, and monitor messages for measuring the round trip time of a connection. Each of these messages will now be discussed in more detail.

Test messages are used by a TALI implementation to query the remote end of a TALI connection with respect to the willingness of the remote end to carry SS7 service data. Test messages are preferably sent periodically by each TALI implementation based on a predetermined timeout value. Upon receiving a test message, a TALI implementation must reply with either a prohibit or an allow message to indicate whether the TALI implementation will carry SS7 service data over a TALI connection. If no response is received within the predetermined time period, the connection may be reset and/or reestablished.

Table 1 below illustrates the packet structure of a test message. In Table 1, the test message includes a SYNC field, an OPCODE field, and a LENGTH field. The SYNC field is set to TALI, the OPCODE field is set to test, and the LENGTH field is set to 0.

**Table 1: Test Message**

| **Octets** | **Field Name** | **Description** |
|---|---|---|
| 0..3 | SYNC | 'TALI' |
| 4..7 | OPCODE | 'test' |
| 8..9 | LENGTH | Length = 0 |

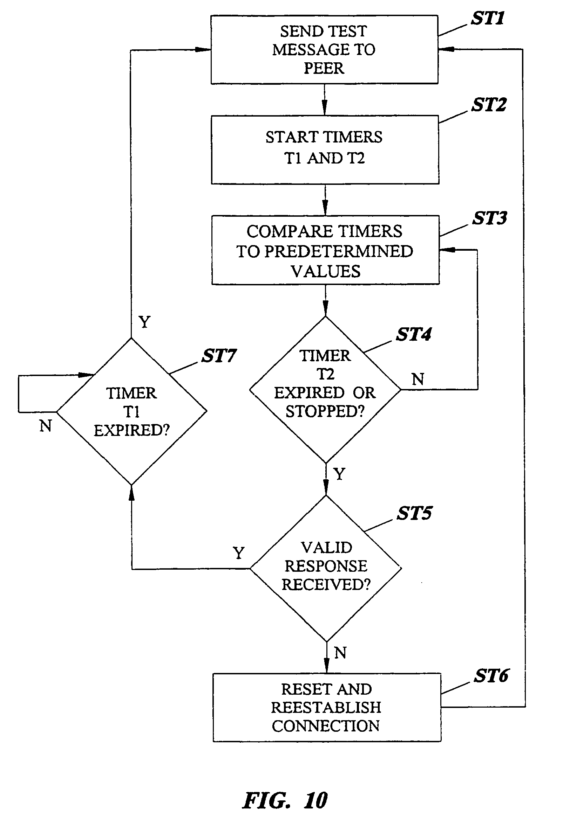

Figure 10 is a flowchart illustrating exemplary steps that may be performed by a TALI process in monitoring the status of the connection using test messages. In step **ST1,** TALI process **322** sends a test message to a peer on the other side of a connection. In step **ST2,** TALI process **322** starts timers T1 and T2. The timer T1 may be used to determine when to send the next test message and the timer T2 may be used to determine the time for receiving a valid response to the test message. In step **ST3**, timers T1 and T2 are compared to predetermined values. For example, the predetermined value for timer T1 may be set to a time period for sending the next test message. The timer value T2 may be set to a predetermined time period that is preferably less than the keep-alive timer for TCP. For example, the timeout period may be set for two round trip times for the given connection. A method for measuring the round trip time of a connection will be discussed in more detail below.

In step **ST4,** TALI process **322** determines whether the timer T2 has expired or stopped. The timer T2 expires when it reaches the timeout period set for T2. The timer T2 stops when an allow or a prohibit message is received. If the timer T2 has not expired or stopped, TALI process **322** continues to check the timer. In step **ST5,** if TALI process **322** determines that the timer T2 has expired, TALI process **322** determines whether a valid response to the test message has been received. As discussed above, a valid response to the test message may be an allow message or a prohibit message. If a valid response has been received, TALI process **322** determines whether timer T1 has expired or stopped, and, if so, sends another test message to the other side (steps **ST6** and **ST1**). In step **ST7,** if a valid response has not been received, TALI process **322** may reset and attempt to reestablish the connection. Since the timeout period is preferably less than that of a TCP connection, monitoring of connection status using test messages provides more efficient connection management that TCP. Moreover, because test messages are periodically sent and acted upon, TALI connections can be reliably maintained.

### Allow and Prohibit Messages

As discussed above, the TALI protocol provides allow and prohibit message for allowing and prohibiting communications over a TCP connection without invoking TCP connection and establishment and termination procedures. The allow message is sent in reply to a test query or in response to an internal implementation event to indicate that a TALI implementation is willing to carry SS7 service data over a TALI session. As used herein, a TALI session refers to TALI-level connection between endpoints. A TALI session may be created by establishing a TCP connection followed by the exchange of allow messages, as will be discussed in more detail below. The allow message informs the far end that SS7 traffic can be transmitted on the connection. Allow is one of two possible valid replies to a test message. Before SS7 traffic can be carried over a connection, both ends of the connection are required to send allow messages to each other. Table 2 shown below illustrates an exemplary packet structure for an allow message. In Table 2, the allow message includes a SYNC field, an OPCODE field, and a LENGTH field. The SYNC field is set to TALI to indicate that the packet is a TALI packet. The OPCODE field is set to 'allo' to identify an allow message. The LENGTH field is set to 0, since the service portion of the TALI packet does not carry any data.

**Table 2: Allow Message**

| **Octets** | **Field Name** | **Description** |
|---|---|---|
| 0..3 | SYNC | 'TALI' |
| 4..7 | OPCODE | 'allo' |
| 8..9 | LENGTH | Length = 0 |

Like the allow message, the prohibit message is sent in reply to a test query or in response to an internal implementation event. However, unlike the allow message, the purpose of the prohibit message is to indicate that a TALI implementation is not willing to carry SS7 service over the TALI session. The prohibit message informs the far end that SS7 traffic cannot be transmitted over the connection. As long as one end of the connection remains prohibited, SS7 traffic cannot be carried over the connection. Table 3 illustrates an exemplary packet structure for a prohibit message. In Table 3, the prohibit message includes a SYNC field, an OPCODE field, and a LENGTH field. The SYNC field is set to TALI to identify the message as a TALI packet. The OPCODE field is set to 'proh' for prohibit. The LENGTH field is set to 0, since the message does not carry any data in the service portion of the message.

**Table 3: Prohibit Message**

| **Octets** | **Field Name** | **Description** |
|---|---|---|
| 0..3 | SYNC | 'TALI' |
| 4..7 | OPCODE | 'proh' |
| 8..9 | LENGTH | Length = 0 |

A prohibit acknowledgement message is a message sent by TALI implementation in response to receiving a prohibit message from the far end of a connection. Receipt of a prohibit acknowledgement message indicate that the prohibit message was received correctly and will be acted on accordingly. The side of a connection receiving a prohibit acknowledgement message can thus assume that no more data will be transferred over the connection and that it is okay to perform some desired action associated with the connection. Table 4 shown below illustrates a prohibit acknowledgement message according to an embodiment of the present invention. In Table 4, prohibit acknowledgement message includes a SYNC field, an OPCODE field, and a LENGTH field. The SYNC field may include the value TALI to indicate that the message is a TALI message. The OPCODE field may store the value 'proa' to indicate that the message is a prohibit acknowledgement message. The LENGTH field may include a value of 0, because the service portion of the message does not contain any data.

**Table 4: Prohibit Acknowledgement Message**

| **Octets** | **Field Name** | **Description** |
|---|---|---|
| 0..3 | SYNC | 'TALI' |
| 4..7 | OPCODE | 'proa' |
| 8..9 | LENGTH | Length = 0 |

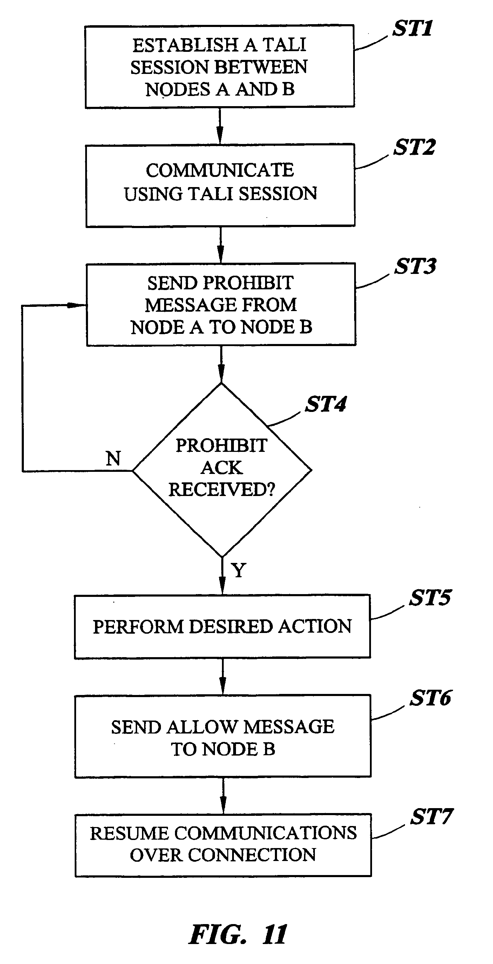

Figure 11 is a flowchart illustrating the advantages of using prohibit and acknowledgement messages to enable and disable connections. In step **ST1,** a TALI session is established between two nodes, node A and node B. Nodes A and B may each be any type of node previously described in which it is desirable to implement a TALI protocol stack. For example, either node may be a signaling gateway, a media gateway controller, or an IP-capable SCP. Establishing a TALI session may include establishing a TCP connection between nodes A and B followed by the exchange of allow messages between nodes A and B. Once the connection is established and communications are allowed, in step **ST2**, nodes A and B communicate using the TALI session. Such communication may include exchange of SS7 call signaling messages, such as SCCP messages, TCAP messages, ISUP messages, and MTP3 messages. In step **ST3,** node A sends a prohibit message to node B. The reason for sending the prohibit message may be that node A desires to perform a software upgrade. In step **ST4,** node A determines whether a prohibit acknowledge message has been received. If a prohibit acknowledge message has not been received, node A may retransmit the prohibit message.

In step **ST5,** once node A receives the prohibit acknowledge message, node A can assume that data will not be received from node B over the prohibited connection. Accordingly, the manager of node B can perform some desired action, such as a software upgrade. When the desired action is complete, in step **ST6**, node A can send an allow message to node B over the connection. Once node B receives the allow message, node B can resume communications over the disabled connection. Because a transport adapter layer interface connection can be allowed and prohibited without invoking TCP connection establishment and termination procedures, the time and processing resources required for these operations are reduced over conventional TCP procedures.

### Performance Measurement and Version Identification

According to another aspect of the invention, messages may be sent between TALI implementation to measure performance of a specific connection and to communicate the TALI version number between communication endpoints. One performance measurement that may be of interest is the round trip time. The round trip time is the time for a message to travel from one side of a connection to the other and back. The vehicle for measuring the round trip time according to the present embodiment includes a monitor message and a monitor acknowledgement message. A monitor message provides a generic echo capability that can be used by a TALI implementation in order to measure the round trip time. Table 5 shown below is an example packet structure for the monitor message. In Table 5, the monitor message includes a SYNC field, an OPCODE field, a LENGTH field, a version label field, and a Data field. The SYNC field identifies the monitor message as a TALI message. The OPCODE field includes the value 'moni' to identify the message as a monitor message. The LENGTH field includes the length of the data portion of the monitor message, which contains vendor-dependent data. The version label field in the monitor message may be used to communicate the TALI version number to the far end of a connection. The possible version label field values xxx.yyy specify the major and minor TALI version numbers. For example, a version label field value of 001.000 specifies TALI version 1.0.

**Table 5: Version Control 'moni' Message**

| **Octets** | **Field Name** | **Description** | **Type of Field** |
|---|---|---|---|
| 0..3 | SYNC | 'TALI' | 4 byte Ascii text |
| 4..7 | OPCODE | 'moni' | 4 byte Ascii text |
| 8..9 | LENGTH | Length (include the version label and data fields) | Integer |
| 10.. 21 | VER. LABEL | 'vers xxx.yyy' | 12 byte Ascii text |
| 22..X | Data | Vendor Dependent Maximum length of this message (as coded in bytes 8-9, and stored in bytes 10-x) should not exceed 200 bytes | Variable |

In response to receiving a monitor message, a TALI session preferably sends a monitor acknowledgement message. Table 6 shown below illustrates an example packet structure for a monitor acknowledgement message. In the illustrated example, the monitor acknowledgement message includes a SYNC field, an OPCODE field, a LENGTH field, and a Data field. The SYNC field stores the value TALI to indicate the start of a TALI packet. The OPCODE field stores the value 'mona' to identify the packet as a monitor acknowledgement message. The LENGTH field stores the length of the data portion of the monitor acknowledgement message. The data portion of the monitor acknowledgement message preferably includes the same data that was sent in the monitor message. The matching of data allows the monitor message to be paired with the monitor acknowledgement message.

**Table 6: Monitor Acknowledgement Message**

| **Octets** | **Field Name** | **Description** |
|---|---|---|
| 0..3 | SYNC | 'TALI' |
| 4..7 | OPCODE | 'mona' |
| 8..9 | LENGTH | Length |
| 10..X | Data | Vendor Dependent |

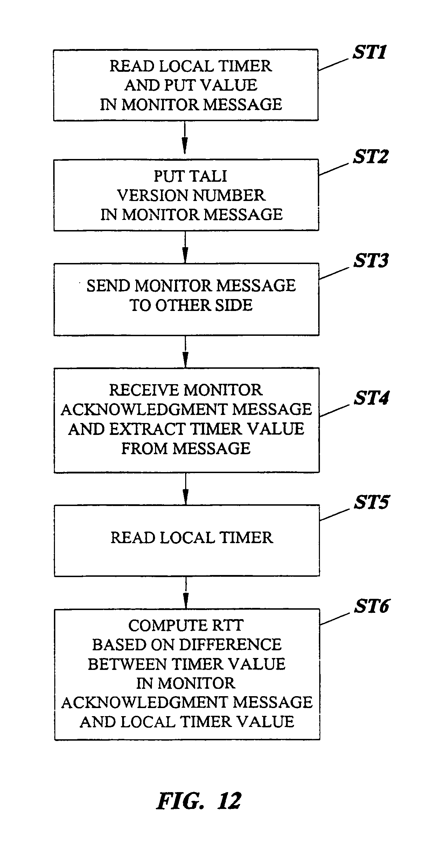

Figure 12 is a flowchart illustrating the use of the monitor message and the monitor acknowledgement message to measure the round trip time of a connection and to communicate the TALI version number to the far end of a connection. In step **ST1,** a TALI implementation reads a timer value associated with the local machine and includes the timer value in a monitor message. In step **ST2,** the TALI implementation places its TALI version number in the monitor message. The version number is used by the other side of a TALI connection to keep track of the version number. For example, upon receiving a monitor message, an endpoint may determine whether the monitor message has a valid version label value in the version label field. This may include comparing bytes located where the version label field should be in the monitor message to a predetermined list of version values. If the value matches one of the values in the list, then the endpoint stores that value as the TALI version for the other side. If the match is not found, the endpoint may store a default version for the other side, e.g., 1.0. Since both sides of a connection preferably send monitor messages to each other and the monitor messages can include the sending sides TALI version number, each side of the connection can determine the current version of the other side.

In step **ST3,** the TALI implementation sends the monitor message to the other side of a connection. As discussed above, the other side of the connection may use the version label to update the TALI version of the sending side. The other side of the connection changes the OPCODE of the message from monitor to monitor acknowledgment and sends the message back to the sending TALI implementation. In step **ST4,** the TALI implementation receives the monitor acknowledgement message from the other side of the connection and extracts a timer value from the monitor acknowledgement message. In step **ST5,** the TALI implementation reads the local timer value when the monitor acknowledgement message was received. In step **ST6,** the TALI implementation computes the round trip time for the connection based on the difference between the local timer value when the monitor message was received and timer value read from the monitor acknowledgement message. Computing the round trip time in this manner allows optimization of other timers, such as retransmission timers.

### Authentication of Critical Messages

As indicated above, many of the messages sent between TALI implementations can allow and/or prohibit communications over a connection. Since such messages could be disastrous in a telecommunications environment, it is preferable that security messages be implemented to ensure that only authorized users can send these messages. One method for providing this security is to authenticate critical messages. Examples of critical messages described herein are prohibit messages and test messages. To ensure that these messages are transmitted by authorized users, encryption and/or authentication procedures can be used. In one example, a public key encryption algorithm, such as Rivest, Shamir, Adleman (RSA), can be used to verify that the message originated from an authorized user. In order to authenticate a message using a public key encryption algorithm, the sending node sends its public key to the receiving node. The sending node then signs the message using its private key. The receiving node then authenticates the message using the sending node's public key. If the message authenticates correctly, i.e., if a valid TALI message is received, then the receiving node knows that the message came from an authorized user. In this manner, the security of TALI connections can be increased.

According to another aspect of the invention, critical messages may be authenticated in a different manner using a public key cryptosystem. For example, a sender and a receiver may exchange public keys. That is, the sender S may send S's public key to the receiver R, and R may send R's public key to S. S may then encrypt a critical message, such as a prohibit message using R's public key. When R receives the message, R may decrypt the message using R's private key. If the message decrypts correctly, R knows that the message comes from someone who has access to R's public key. R may then encrypt a response message, such as a prohibit acknowledgement message, using S's public key. R may then send the message to S. S may decrypt the message using S's private key. If the message decrypts correctly, S knows that the message originated from someone with access to S's public key. In this manner, two-way authentication may be achieved.

It will be understood that various details of the invention may be changed without departing from the scope of the invention. Furthermore, the foregoing description is for the purpose of illustration only, and not for the purpose of limitation-the invention being defined by the claims.

## Claims

1. A method for encapsulating a signaling connection control part (SCCP) message in an Internet protocol (IP) datagram using a transport adapter layer interface (TALI), the method or computer program product including or performing the following steps:
(a) receiving an SS7 message signal unit (MSU), the SS7 MSU including message transfer part (MTP) layers 1, 2, and 3 and an SCCP layer,
(b) discarding MTP layer 1 and 2 information from the SS7 MSU;
(c) placing the SCCP layer in a service portion of a TALI packet;
(d) adding a TALI header to the TALI packet; and
(e) adding stream oriented connection protocol and IP headers to the TALI packet.

2. The method of claim 1 comprising placing MTP layer 3 information without modification into the service portion of the TALI packet.

3. The method of claim 1 comprising extracting MTP layer 3 information from the SS7 MSU and placing the MTP layer 3 information in the SCCP layer.

4. The method of claim 3 wherein extracting MTP layer 3 information includes extracting an originating point code (OPC) value from the SS7 MSU and placing the MTP layer 3 information in the SCCP layer includes placing the OPC value in a calling party address field in the SCCP layer.

5. The method of claim 3 wherein extracting MTP layer 3 information includes extracting a destination point code (DPC) value from the SS7 MSU and placing the MTP layer 3 information in the SCCP layer includes placing the DPC value in a called party address field in the SCCP layer.

6. The method of claim 1 comprising setting a SYNC field in the TALI packet to a predetermined value indicating the beginning of the TALI packet for stream-oriented communications.

7. The method of claim 1 comprising setting a LENGTH field in the TALI packet to a value indicative of the LENGTH of the service portion of the TALI packet.

8. The method of claim 1 comprising setting an OPCODE field in the TALI packet to a predetermined value for identifying the TALI packet as an SCCP packet.

9. A method for encapsulating a message transfer part layer 3 (MTP3) packet in an Internet protocol (IP) datagram using a transport adapter layer interface (TALI), the method or computer program product including or performing the following steps:
(a) receiving an MTP3 message signal unit (MSU), the MTP3 MSU including MTP layers 1, 2, and 3;
(b) discarding MTP layers 1 and 2 from the MTP3 MSU;
(c) placing MTP layer 3 information from the MTP3 MSU in a service portion of a TALI packet;
(d) adding a TALI header to the TALI packet; and
(e) adding stream-oriented transport protocol and IP headers to the TALI packet.

10. The method of claim 9 wherein placing the MTP layer 3 information in the service portion includes placing a routing label and a service indicator octet (SIO) in the service portion of the TALI packet.

11. The method of claim 10 wherein placing the MTP layer 3 information in the service portion includes placing layer 3 information in addition to the routing label and the SIO in the service portion of the TALI packet.

12. The method of claim 11 wherein placing information in addition to the routing label and the SIO includes placing network management information in the service portion of the TALI packet.

13. The method of claim 12 wherein placing network management information in the service portion of the TALI packet includes placing changeover information in the service portion of the TALI packet.

14. The method of claim 12 wherein placing network management information in the service portion of the TALI packet includes placing changeback information in the service portion of the TALI packet.

15. The method of claim 12 wherein placing network management information in the service portion of the TALI packet includes placing flow control information in the service portion of the TALI packet.

16. The method of claim 11 wherein placing information in addition to the routing label and the SIO includes placing network testing information in the service portion of the TALI packet.

17. The method of claim 16 wherein placing network testing information in the service portion of a TALI packet includes placing signaling-route-set-test information in the service portion of the TALI packet.

18. The method of claim 9 comprising setting a SYNC field in the TALI packet to a predetermined value indicating the beginning of the TALI packet for stream-oriented communications.

19. The method of claim 9 comprising setting a LENGTH field in the TALI packet to a value indicative of the LENGTH of the service portion of the TALI packet.

20. The method of claim 9 comprising setting the OPCODE field to a predetermined value for identifying the TALI packet as an MTP3 packet.

21. The method of claim 9 comprising adding an application layer sequence number to the TALI packet.

22. The method of claim 21 comprising adding an application layer sequence number includes adding a service specific connection oriented protocol (SSCOP) trailer to the TALI packet.

23. A method for monitoring the status of a stream-oriented transport protocol connection used to communicate SS7 messages between SS7 and Internet protocol (IP) nodes, the method or computer program product including or performing the following steps:
(a) establishing a first stream-oriented transport protocol connection for communicating SS7 messages between a first signaling node and a second signaling node;
(b) transmitting a first transport adapter layer interface (TALI) protocol message encapsulated in a stream-oriented transport protocol segment over the first stream-oriented transport protocol connection;
(c) listening for a reply to the first message over the first stream-oriented transport protocol connection; and
(d) in response to failing to receive the reply within a predetermined time period, treating the first stream-oriented transport protocol connection as being disabled.

24. The method of claim 23 comprising in response to failing to receive the reply within the predetermined time period, attempting the reestablish communications over the first stream-oriented transport protocol connection.

25. The method of claim 23 wherein the predetermined time period is less than a stream-oriented transport protocol disconnection timeout value.

26. The method of claim 23 wherein transmitting a first TALI protocol message includes transmitting a TALI test message and listening for a reply includes listening for a TALI allow or prohibit message.

27. The method of claim 23 comprising, in response to receiving the reply, determining a round trip time (RTT) between the first and second signaling nodes.

28. The method of claim 27 wherein determining a round trip time includes:
(a) reading a local timer value and inserting the local timer value in the first message;
(b) reading the local timer value when the reply is received;
(c) reading a timer value from the reply; and
(d) computing the RTT based on the difference between the timer value in the reply and the local timer value when the reply was received.

29. The method of claim 23 comprising inserting a local TALI version number in the first TALI protocol message.

30. A method for suspending and resuming SS7 message communications over a stream-oriented transport protocol connection, the method or computer program product including or performing the following steps:
(a) establishing a first stream-oriented transport protocol connection between a first signaling node and a second signaling node;
(b) sending and receiving stream-oriented transport protocol-encapsulated SS7 messages over the first stream-oriented transport protocol connection; and
(c) receiving a first control message over the first stream-oriented transport protocol connection and, in response, stopping the sending of SS7 messages over the first stream-oriented transport protocol connection.

31. The method of claim 30 comprising, after receiving the first control message, resuming the sending of SS7 messages over the first stream-oriented transport protocol connection in response to receiving a second control message over the first stream-oriented transport protocol connection.

32. The method of claim 30 comprising, in response to receiving the first control message, switching SS7 communications between the first and second signaling nodes to a second stream-oriented transport protocol connection established between the first and second signaling nodes.

33. The method of claim 30 wherein receiving a first control message includes receiving the first control message signed using a predetermined encryption algorithm and verifying that the first control message originating from an authorized node using the first encryption algorithm.

34. The method of claim 30 wherein establishing a stream-oriented transport protocol connection between first and second signaling nodes includes establishing the first stream-oriented transport protocol connection between a signaling gateway and a media gateway controller.

35. The method of claim 30 wherein establishing a connection between first and second signaling nodes includes establishing a connection between a first SS7 signaling node and an IP node.

36. The method of claim 30 wherein establishing a connection between first and second signaling nodes includes establishing a connection between a first IP-capable SS7 signaling node and a second IP-capable SS7 node.

37. A method for processing transport adapter layer interface (TALI) messages received over a stream-oriented transport protocol connection, the method or computer program product including or performing the following steps:
(a) receiving a plurality of TALI messages over a stream-oriented transport protocol connection;
(b) identifying the beginning of each of the TALI messages using a first field in each of the TALI messages;
(c) identifying the end of each of the TALI messages using a second field in each of the TALI messages; and
(d) extracting individual TALI message packets using the first and second fields.

38. The method of claim 37 comprising identifying the content of each of the TALI messages using a third field in each of the TALI messages.

39. The method of claim 37 wherein receiving a plurality of TALI messages over a stream-oriented connection includes receiving a plurality of TALI messages over a stream-oriented transport protocol connection.

40. The method of claim 37 wherein identifying the beginning of each of the TALI messages includes identifying each of the TALI messages using a SYNC field in each of the TALI messages.

41. The method of claim 37 wherein identifying the end of each of the TALI messages using a second data field includes identifying the end of each of the TALI messages using a LENGTH field for specifying the length of a data portion of each of the TALI messages.

42. The method of claim 38 wherein identifying the content of each of the TALI messages using a third data field includes identifying the content of each of the TALI messages using an OPCODE field for specifying the content of each of the TALI messages.

43. The method of claim 37 wherein a data portion of each of the TALI messages carries SS7 information.

44. A communications network element for implementing a transport adapter layer interface (TALI) protocol stack, the communications network element comprising:
(a) a TALI process adapted to receive SS7 messages, discarding SS7 layer 1 and 2 information from the SS7 messages, and to add a TALI header to each of the SS7 messages to form TALI messages; and
(b) a stream-oriented transport protocol process adapted to receive the TALI messages from the TALI process, to add stream-oriented transport protocol and IP headers to the TALI messages, and to forward the TALI messages to a receiving application over an IP network based on the stream-oriented transport protocol and IP headers.

45. The communications network element of claim 44 comprising a data communications module (DCM) including hardware adapted to send and receive messages over the IP network, wherein the TALI process is implemented on the DCM.

46. The communications network element of claim 45 wherein the stream-oriented transport protocol process is implemented on the DCM.

47. The communications network element of claim 44 wherein the stream-oriented transport protocol process is adapted to receive a stream of TCP data from the IP network.

48. The communications network element of claim 44 wherein the TALI process is adapted to receive the stream of TCP data from the stream-oriented transport protocol process and to identify individual TALI message boundaries in the stream.

49. A computer program product comprising a program stored on a machine readable medium which when loaded in a general purpose computer causes it to carry out the method steps of claims 1-43.

## Patentansprüche

1. Verfahren zum Verkapseln einer Signalisierungsverbindungssteuerteil-(SCCP-) Nachricht in einem Internet-Protokoll-(IP-)Datagramm, wobei ein Transportadapterschicht-Interface (TALI) benutzt wird, wobei das Verfahren oder das Computerprogrammprodukt die folgenden Schritte beinhaltet oder ausführt:
(a) Empfangen einer SS7-Nachrichtsignaleinheit (MSU), wobei die SS7-MSU Nachrichtübertragungsteil-(MTP-) Schichten 1, 2 und 3 und eine SCCP-Schicht aufweist,
(b) Verwerfen von MTP-Schicht-1-und-2-Informationen von der SS7-MSU;
(c) Platzieren der SCCP-Schicht in einem Dienstteil eines TALI-Pakets;
(d) Hinzufügen eines TALI-Nachrichtenkopfes an dem TALI-Paket; und
(e) Hinzufügen von stromorientierten Verbindungsprotokoll- und IP-Nachrichtenköpfen an das TALI-Paket.

2. Verfahren nach Anspruch 1, welches das Platzieren der MTP-Schicht-3-Information ohne Modifikation in das Dienstteil des TALI-Pakets aufweist.

3. Verfahren nach Anspruch 1, welches das Extrahieren der MTP-Schicht-3-Information von der SS7-MSU und das Platzieren der MTP-Schicht-3-Information in der SCCP-Schicht aufweist.

4. Verfahren nach Anspruch 3, in welchem das Extrahieren der MTP-Schicht-3-Information das Extrahieren eines Ursprungspunktcode-(OPC-)Wertes von der SS7-MSU beinhaltet und das Platzieren der MTP-Schicht-3-Information in der SCCP-Schicht das Platzieren des OPC-Wertes in einem Anrufer-Adressfeld in der SCCP-Schicht beinhaltet.

5. Verfahren nach Anspruch 3, in welchem das Extrahieren der MTP-Schicht-3-Information das Extrahieren eines Zielpunktcode-(DPC-)Wertes von der SS7-MSU beinhaltet und das Platzieren der MTP-Schicht-3-Information in der SCCP-Schicht das Platzieren des DPC-Wertes in einem Anrufer-Adressfeld in der SCCP-Schicht beinhaltet.

6. Verfahren nach Anspruch 1, welches das Setzen eines SYNC-Feldes in dem TALI-Paket auf einen vorbestimmten Wert beinhaltet, welcher den Beginn des TALI-Pakets für stromorientierte bzw. verbindungsorientierte Kommunikation anzeigt.

7. Verfahren nach Anspruch 1, welches das Setzen eines LENGTH- bzw. LÄNGE-Feldes in dem TALI-Paket auf einen Wert aufweist, welcher die LENGTH bzw. LÄNGE des Serviceteils des TALI-Pakets anzeigt.

8. Verfahren nach Anspruch 1, welches das Setzen eines OPCODE-Feldes in dem TALI-Paket auf einen vorbestimmten Wert aufweist, um das TALI-Paket als ein SCCP-Paket zu identifizieren.

9. Verfahren zum Verkapseln eines Nachrichtenübertragungsteil-Schicht-3-(MTP3-) Paketes in ein Internet-Protokoll-(IP-)Datagramm, wobei ein Transportadapterschicht-Interface (TALI) benutzt wird, wobei das Verfahren oder das Computerprogrammprodukt die folgenden Schritte beinhaltet oder ausführt:
(a) Empfangen einer MTP3-Nachrichtensignaleinheit (MSU), wobei die MTP3-MSU MTP-Schichten 1, 2 und 3 beinhaltet;
(b) Verwerfen der MTP-Schichten 1 und 2 von der MTP3-MSU;
(c) Platzieren einer MTP-Schicht-3-Information von der MTP3-MSU in einem Dienstteil eines TALI-Pakets;
(d) Hinzufügen eines TALI-Nachrichtenkopfes an das TALI-Paket; und
(e) Hinzufügen von stromorientierten Transportprotokoll- und IP-Nachrichtenköpfen an das TALI-Paket.

10. Verfahren nach Anspruch 9, in welchem das Platzieren der MTP-Schicht-3-Information in dem Serviceteil das Platzieren eines Routing-Etiketts bzw. -Kennzeichens und eines Dienstindikationsoktetts (SIO) in dem Dienstteil des TALI-Pakets beinhaltet.

11. Verfahren nach Anspruch 10, in welchem das Platzieren der MTP-Schicht-3-Information in dem Dienstteil das Platzieren der Schicht-3-Information zusätzlich zu dem Routing-Etikett und dem SIO in dem Dienstteil des TALI-Pakets beinhaltet.

12. Verfahren nach Anspruch 11, in welchem das Platzieren von Information zusätzlich zu dem Routing-Etikett und dem SIO das Platzieren von Netzwerksteuerungsinformation in dem Serviceteil des TALI-Pakets beinhaltet.

13. Verfahren nach Anspruch 12, in welchem das Platzieren von Netzwerksteuerinformation in dem Dienstteil des TALI-Pakets das Platzieren von Umschaltinformation in dem Dienstteil des TALI-Pakets beinhaltet.

14. Verfahren nach Anspruch 12, in welchem das Platzieren von Netzwerksteuerinformation in dem Serviceteil des TALI-Pakets das Platzieren von Rückschaltinformation in dem Serviceteil des TALI-Pakets beinhaltet.

15. Verfahren nach Anspruch 12, in welchem das Platzieren von Netzwerksteuerinformation in dem Dienstteil des TALI-Pakets das Platzieren von Flusssteuerinformation in dem Dienstteil des TALI-Pakets beinhaltet.

16. Verfahren nach Anspruch 11, in welchem das Platzieren von Information zusätzlich zu dem Routing-Etikett und der SIO das Platzieren von Netzwerktestinformation in dem Dienstteil des TALI-Pakets beinhaltet.

17. Verfahren nach Anspruch 16, in welchem das Platzieren von Netzwerktestinformation in dem Dienstteil eines TALI-Pakets das Platzieren von Signalisierungs-Route-Einstellungstestinformation in dem Dienstteil des TALI-Pakets beinhaltet.

18. Verfahren nach Anspruch 9, welches das Setzen eines SYNC-Feldes in dem TALI-Paket auf einen vorbestimmten Wert aufweist, welcher den Beginn des TALI-Pakets für stromorientierte Kommunikation anzeigt.

19. Verfahren nach Anspruch 9, welches das Setzen eines LENGTH-Feldes in dem TALI-Paket auf einen Wert aufweist, welcher die LENGTH bzw. LÄNGE des Dienstteils des TALI-Paketes anzeigt.

20. Verfahren nach Anspruch 9, welches das Setzen des OPCODE-Feldes auf einen vorbestimmten Wert aufweist, um das TALI-Paket als ein MTP3-Paket zu identifizieren.

21. Verfahren nach Anspruch 9, welches das Hinzufügen einer Anwendungsschicht-Reihenfolgenummer an das TALI-Paket aufweist.

22. Verfahren nach Anspruch 21, welches das Hinzufügen einer Anwendungsschicht-Reihenfolgenummer aufweist, wobei das Hinzufügen eines dienstspezifischen, verbindungsorientierten Protokoll-(SSCOP-)Dateiende-Etiketts an dem TALI-Paket beinhaltet.

23. Verfahren zum Überwachen des Zustands einer stromorientierten Transportprotokollverbindung, welche zum Kommunizieren von SS7-Nachrichten zwischen SS7- und Internet-Protokoll-(IP-)Knoten benutzt wird, wobei das Verfahren oder das Computerprogrammprodukt die folgenden Schritte beinhaltet oder ausführt:
(a) Erstellen einer ersten stromorientierten Transportprotokollverbindung für Kommunikations-SS7-Nachrichten zwischen einem ersten Signalisierungsknoten und einem zweiten Signalisierungsknoten;
(b) Übertragen einer ersten Transportadapterschicht-Interface-(TALI-) Protokollnachricht, welche in einem stromorientierten Transportprotokollsegment verkapselt ist, über die erste stromorientierte Transportprotokollverbindung;
(c) Horchen nach einer Rückantwort auf die erste Nachricht über die erste stromorientierte Transportprotokollverbindung; und
(d) in Antwort darauf, dass das Empfangen der Erwiderungsnachricht innerhalb einer vorbestimmten Zeitperiode misslingt, Behandeln der ersten stromorientierten Transportprotokollverbindung als ausgeschaltete Transportprotokollverbindung.

24. Verfahren nach Anspruch 23, welches in Antwort auf das Fehlschlagen des Empfangs der Rückantwort innerhalb einer vorbestimmten Zeitperiode das Versuchen aufweist, die Kommunikation über die erste stromorientierte Transportprotokollverbindung wieder zu erstellen.

25. Verfahren nach Anspruch 23, in welchem die vorbestimmten Zeitperiode kleiner als ein stromorientierter Transportprotokoll-Abschaltungstotzeitwert ist.

26. Verfahren nach Anspruch 23, in welchem das Übertragen einer ersten TALI-Protokollnachricht das Übertragen einer TALI-Testnachricht beinhaltet und das Horchen nach einer Rückantwort das Horchen nach einer TALI-Erlaubnis- oder -Verbotsnachricht beinhaltet.

27. Verfahren nach Anspruch 23, welches in Antwort auf das Empfangen der Rückantwort das Bestimmen einer Umlaufzeit (RTT) zwischen dem ersten und dem zweiten Signalisierungsknoten aufweist.

28. Verfahren nach Anspruch 27, in welchem das Bestimmen einer Umlaufzeit beinhaltet:
(a) Lesen eines lokalen Zeittaktwertes und Einfügen des lokalen Zeittaktwertes in die erste Nachricht;
(b) Lesen des lokalen Zeittaktwertes, wenn die Rückantwort empfangen wird;
(c) Lesen eines Zeittaktwertes aus der Rückantwort; und
(d) Berechnen des RTT, basierend auf dem Unterschied zwischen dem Zeittaktwert in der Rückantwort und dem lokalen Zeittaktwert, wenn die Rückantwort empfangen wurde.

29. Verfahren nach Anspruch 23, welches das Einfügen einer lokalen TALI-Versionsnummer in der ersten TALI-Protokollnachricht aufweist.

30. Verfahren zum Anhalten und Zurückweisen von SS7-Nachrichtenkommunikation über eine stromorientierte Transportprotokollverbindung, wobei das Verfahren oder Computerprogramm die folgenden Schritte beinhaltet oder ausführt:
(a) Erstellen einer ersten stromorientierten Transportprotokollverbindung zwischen einem ersten Signalisierungsknoten und einem zweiten Signalisierungsknoten;
(b) Senden und Empfangen von stromorientierten, Transportprotokoll-verkapselten SS7-Nachrichten über die erste stromorientierte Transportprotokollverbindung und
(c) Empfangen einer ersten Steuernachricht über die erste stromorientierte Transportprotokollverbindung und in Antwort darauf Anhalten des Sendens der SS7-Nachrichten über die erste stromorientierte Transportprotokollverbindung.

31. Verfahren nach Anspruch 30, welches nach dem Empfangen der ersten Steuernachricht aufweist: Zurückweisen des Sendens der SS7-Nachrichten über die erste stromorientierte Transportprotokollverbindung in Antwort auf das Empfangen einer zweiten Steuernachricht über die erste stromorientierte Transportprotokollverbindung.

32. Verfahren nach Anspruch 30, welches in Antwort auf das Empfangen der ersten Steuernachricht aufweist: Schalten von SS7-Kommunikation zwischen dem ersten und zweiten Signalisierungsknoten zu einer zweiten stromorientierten Transportprotokollverbindung, welche zwischen dem ersten und dem zweiten Signalisierungsknoten erstellt ist.

33. Verfahren nach Anspruch 30, in welchem das Empfangen einer ersten Steuernachricht beinhaltet: Empfangen der ersten Steuernachricht, welche unter Benutzung eines vorbestimmten Verschlüsselungsalgorithmus unterzeichnet ist, und Verifizieren, dass die erste Steuernachricht, welche von einem autorisierten Knoten herrührt, den ersten Verschlüsselungsalgorithmus benutzt.

34. Verfahren nach Anspruch 30, in welchem das Erstellen einer stromorientierten Transportprotokollverbindung zwischen dem ersten und dem zweiten Signalisierungsknoten das Erstellen der ersten stromorientierten Transportprotokollverbindung zwischen einem Signalisierungs-Gateway und einem Medien-Gateway-Steuergerät beinhaltet.

35. Verfahren nach Anspruch 30, in welchem das Erstellen einer Verbindung zwischen dem ersten und dem zweiten Signalisierungsknoten das Erstellen einer Verbindung zwischen einem ersten SS7-Signalisierungsknoten und einem IP-Knoten beinhaltet.

36. Verfahren nach Anspruch 30, in welchem das Erstellen einer Verbindung zwischen dem ersten und zweiten Signalisierungsknoten das Erstellen einer Verbindung zwischen einem ersten IP-fähigen SS7-Signalisierungsknoten und einem zweiten IP-fähigen SS7-Knoten beinhaltet.

37. Verfahren zum Verarbeiten von Transportadapterschicht-Interface-(TALI-) Nachrichten, welche über eine stromorientierte Transportprotokollverbindung empfangen wird, wobei das Verfahren oder das Computerprogrammprodukt die folgenden Schritte beinhaltet oder ausführt:
(a) Empfangen einer Mehrzahl von TALI-Nachrichten über eine stromorientierte Transportprotokollverbindung;
(b) Identifizieren des Beginns jeder der TALI-Nachrichten, wobei ein erstes Feld in jeder der TALI-Nachrichten benutzt wird;
(c) Identifizieren des Endes jeder der TALI-Nachrichten, wobei ein zweites Feld in jeder der TALI-Nachrichten benutzt wird; und
(d) Extrahieren individueller TALI-Nachrichtenpakete, wobei die ersten und zweiten Felder benutzt werden.

38. Verfahren nach Anspruch 37, welches das Identifizieren des Inhalts jeder der TALI-Nachrichten aufweist, wobei ein drittes Feld in jeder der TALI-Nachrichten benutzt wird.

39. Verfahren nach Anspruch 37, in welchem das Empfangen einer Mehrzahl von TALI-Nachrichten über eine stromorientierte Verbindung das Empfangen einer Mehrzahl von TALI-Nachrichten über eine stromorientierte Transportprotokollverbindung aufweist.

40. Verfahren nach Anspruch 37, in welchem das Identifizieren des Beginns jeder der TALI-Nachrichten das Identifizieren jeder der TALI-Nachrichten unter Benutzung eines SYNC-Feldes in jeder der TALI-Nachrichten beinhaltet.

41. Verfahren nach Anspruch 37, in welchem das Identifizieren des Endes jeder der TALI-Nachrichten unter Benutzung eines zweiten Datenfeldes das Identifizieren des Endes jeder der TALI-Nachrichten unter Benutzung eines LENGTH-Feldes zum Spezifizieren der Länge eines Datenteils jeder der TALI-Nachrichten beinhaltet.

42. Verfahren nach Anspruch 38, in welchem das Identifizieren des Inhalts jeder der TALI-Nachrichten unter Benutzung eines dritten Datenfeldes das Identifizieren des Inhalts jeder der TALI-Nachrichten unter Benutzung eines OPCODE-Feldes zum Spezifizieren des Inhalts jeder der TALI-Nachrichten beinhaltet.

43. Verfahren nach Anspruch 37, in welchem ein Datenteil jeder der TALI-Nachrichten SS7-Information trägt.

44. Kommunikationsnetzwerkelement zum Implementieren eines Transportadapterschicht-Interface-(TALI-)Protokollstapels, wobei das Kommunikationsnetzwerkelement aufweist:
(a) ein TALI-Verfahren, welches zum Empfangen von SS7-Nachrichten geeignet ist, wobei SS7-Schicht-1-und-2-Information von den SS7-Nachrichten verworfen wird, und geeignet ist, einen TALI-Nachrichtenkopf an jede der SS7-Nachrichten hinzuzufügen, um TALI-Nachrichten zu bilden; und
(b) ein stromorientiertes Transportprotokollverfahren, welches geeignet ist, die TALI-Nachrichten von dem TALI-Prozess zu empfangen, stromorientierte Transportprotokoll- und IP-Nachrichtenköpfe an die TALI-Nachrichten hinzuzufügen und die TALI-Nachrichten an eine Empfangsapplikation über ein IP-Netzwerk basierend auf den stromorientierten Transportprotokoll- und IP-Nachrichtenköpfen weiterzuleiten.

45. Kommunikationsnetzwerkelement nach Anspruch 44, welches ein Datenkommunikationsmodul (DCM) aufweist, welches Hardware beinhaltet, welche geeignet ist, Nachrichten über das IP-Netzwerk zu senden und zu empfangen, wobei das TALI-Verfahren auf dem DCM implementiert ist.

46. Kommunikationsnetzwerkelement nach Anspruch 45, in welchem das stromorientierte Transportprotokollverfahren auf dem DCM implementiert ist.

47. Kommunikationsnetzwerkelement nach Anspruch 44, in welchem das stromorientierte Transportprotokollverfahren adaptiert ist, um einen Strom von TCP-Daten von dem IP-Netzwerk zu empfangen.

48. Kommunikationsnetzwerkelement nach Anspruch 44, in welchem der TALI-Prozess geeignet ist, den Strom von TCP-Daten von dem stromorientierten Transportprotokollverfahren zu empfangen und die individuelle TALI-Nachrichtengrenzen in dem Strom zu identifizieren.

49. Computerprogrammprodukt, welches ein Programm aufweist, welches auf einem von einer Maschine lesbaren Medium gespeichert ist, welches, wenn es in einem gewöhnlichen Computer geladen wird, diesen veranlasst, die Verfahrensschritte nach Anspruch 1 bis 43 auszuführen.

## Revendications

1. Procédé pour encapsuler un message de sous-système de commande de connexions sémaphores (SCCP) dans un datagramme de protocole Internet (IP) en utilisant une interface de couche adaptateur de transport (TALI), le procédé comprenant ou exécutant les étapes suivantes consistant à :
(a) recevoir une unité sémaphore de message SS7 (MSU), la MSU SS7 comprenant des couches de sous-système de transfert de message (MTP) 1, 2 et 3, et une couche SCCP,
(b) supprimer les informations des couches MTP 1 et 2 de la MSU SS7 ;
(c) placer la couche SCCP dans une partie de service d'un paquet TALI ;
(d) ajouter un en-tête TALI au paquet TALI ; et
(e) ajouter des en-têtes de protocole de connexion orienté flux et IP au paquet TALI.

2. Procédé selon la revendication 1, comprenant le placement des informations de la couche MTP 3 sans modification dans la partie de service du paquet TALI.

3. Procédé selon la revendication 1, comprenant l'extraction des informations de la couche MTP 3 à partir de la MSU SS7, et le placement des informations de la couche MTP 3 dans la couche SCCP.

4. Procédé selon la revendication 3, dans lequel l'extraction des informations de la couche MTP 3 inclut l'extraction d'une valeur de code de point d'origine (OPC) à partir de la MSU SS7, et le placement des informations de la couche MTP 3 dans la couche SCCP inclut le placement de la valeur OPC dans un champ adresse de l'appelant dans la couche SCCP.

5. Procédé selon la revendication 3, dans lequel l'extraction des informations de la couche MTP 3 inclut l'extraction d'une valeur de code de point de destination (DPC) à partir de la MSU SS7, et le placement des informations de la couche MTP 3 dans la couche SCCP inclut le placement de la valeur DPC dans un champ adresse de l'appelé dans la couche SCCP.

6. Procédé selon la revendication 1, comprenant la fixation d'un champ SYNC dans le paquet TALI à une valeur prédéterminée qui indique le début du paquet TALI pour des communications orientées flux.

7. Procédé selon la revendication 1, comprenant la fixation d'un champ LENGTH dans le paquet TALI à une valeur indicative de la longueur de la partie de service du paquet TALI.

8. Procédé selon la revendication 1, comprenant la fixation d'un champ OPCODE dans le paquet TALI à une valeur prédéterminée pour identifier le paquet TALI comme un paquet SCCP.

9. Procédé pour encapsuler un paquet de couche de sous-système de transfert de message 3 (MTP3) dans un datagramme de protocole Internet (IP) en utilisant une interface de couche adaptateur de transport (TALI), le procédé comprenant ou exécutant les étapes suivantes consistant à :
(a) recevoir une unité sémaphore de message MTP3, la MSU MTP3 comprenant des couches MTP 1, 2 et 3 ;
(b) supprimer les couches MTP 1 et 2 de la MSU MTP3 ;
(c) placer les informations de la couche MTP 3 en provenance de la MSU MTP3 dans une partie de service d'un paquet TALI ;
(d) ajouter un en-tête TALI au paquet TALI ; et
(e) ajouter les en-têtes de protocole de transport orienté flux et IP au paquet TALI.

10. Procédé selon la revendication 9, dans lequel le placement des informations de la couche MTP 3 dans la partie de service, inclut le placement d'une étiquette de routage et d'un octet indicateur de service (SIO) dans la partie de service du paquet TALI.

11. Procédé selon la revendication 10, dans lequel le placement des informations de la couche MTP 3 dans la partie de service inclut le placement des informations de la couche 3 en plus de l'étiquette de routage et du SIO dans la partie de service du paquet TALI.

12. Procédé selon la revendication 11, dans lequel le placement des informations en plus de l'étiquette de routage et du SIO inclut le placement d'informations de gestion de réseau dans la partie de service du paquet TALI.

13. Procédé selon la revendication 12, dans lequel le placement d'informations de gestion de réseau dans la partie de service du paquet TALI inclut le placement d'informations de basculement dans la partie de service du paquet TALI.

14. Procédé selon la revendication 12, dans lequel le placement d'informations de gestion de réseau dans la partie de service du paquet TALI inclut le placement d'informations de retour dans la partie de service du paquet TALI.

15. Procédé selon la revendication 12, dans lequel le placement d'informations de gestion de réseau dans la partie de service du paquet TALI inclut le placement d'informations de contrôle de flux dans la partie de service du paquet TALI.

16. Procédé selon la revendication 11, dans lequel le placement des informations en plus de l'étiquette de routage et du SIO inclut le placement d'informations de test de réseau dans la partie de service du paquet TALI.

17. Procédé selon la revendication 16, dans lequel le placement d'informations de test de réseau dans la partie de service du paquet TALI inclut le placement d'informations de test - établissement - routage - signalisation dans la partie de service du paquet TALI.

18. Procédé selon la revendication 9, comprenant la fixation d'un champ SYNCH dans le paquet TALI à une valeur prédéterminée qui indique le début du paquet TALI pour des communications orientées flux.

19. Procédé selon la revendication 9, comprenant la fixation d'un champ LENGTH dans le paquet TALI à une valeur indicative de la longueur de la partie de service du paquet TALI.

20. Procédé selon la revendication 9, comprenant la fixation d'un champ OPCODE à une valeur prédéterminée pour identifier le paquet TALI comme un paquet MTP3.

21. Procédé selon la revendication 9, comprenant l'ajout d'un numéro d'ordre de couche application au paquet TALI.

22. Procédé selon la revendication 21, dans lequel l'ajout d'un numéro d'ordre de couche application au paquet TALI comprend l'ajout d'un en-queue de protocole orienté connexion spécifique au service.

23. Procédé pour surveiller l'état d'une connexion de protocole de transport orienté flux utilisée pour transmettre des messages SS7 entre des noeuds SS7 et de protocole Internet (IP), le procédé comprenant ou exécutant les étapes suivantes consistant à :
(a) établir une première connexion de protocole de transport orienté flux pour transmettre des messages SS7 entre un premier noeud de signalisation et un deuxième noeud de signalisation ;
(b) transmettre un premier message de protocole d'interface de couche adaptateur de transport (TALI) encapsulé dans un segment de protocole de transport orienté flux, sur la première connexion de protocole de transport orienté flux ;
(c) écouter une réponse au premier message sur la première connexion de protocole de transport orienté flux ; et
(d) suite à un échec de la réception de la réponse à l'intérieur d'une période de temps prédéterminée, traiter la première connexion de protocole de transport orienté flux comme étant invalidée.

24. Procédé selon la revendication 23, comprenant, suite à un échec de la réception de la réponse à l'intérieur d'une période de temps prédéterminée, une tentative visant à rétablir les communications sur la première connexion de protocole de transport orienté flux.

25. Procédé selon la revendication 23, dans lequel la période de temps prédéterminée est inférieure à une valeur de dépassement de temps de déconnexion de protocole de transport orienté flux.

26. Procédé selon la revendication 23, dans lequel la transmission d'un premier message de protocole TALI inclut la transmission d'un message de test TALI, et l'écoute d'une réponse inclut l'écoute d'un message d'autorisation ou d'interdiction TALI.

27. Procédé selon la revendication 23, comprenant, en réponse à la réception de la réponse, la détermination d'un temps de transmission aller-retour (RTT) entre les premier et deuxième noeuds de signalisation.

28. Procédé selon la revendication 27, dans lequel la détermination d'un temps de transmission aller-retour inclut :
(a) la lecture d'une valeur d'horloge locale et l'insertion de la valeur de l'horloge locale dans le premier message ;
(b) la lecture de la valeur de l'horloge locale lorsque la réponse est reçue ;
(c) la lecture d'une valeur d'horloge à partir de la réponse ; et
(d) les calculs du RTT sur la base de la différence entre la valeur de l'horloge dans la réponse et la valeur de l'horloge locale lorsque la réponse a été reçue.

29. Procédé selon la revendication 23, comprenant l'insertion d'un numéro de version de TALI locale dans le premier message de protocole TALI.

30. Procédé pour suspendre et reprendre des communications de message SS7 sur une connexion de protocole de transport orienté flux, le procédé incluant ou exécutant les étapes suivantes consistant à :
(a) établir une première connexion de protocole de transport orienté flux entre un premier noeud de signalisation et un deuxième noeud de signalisation ;
(b) envoyer et recevoir des messages SS7 encapsulés par protocole de transport orienté flux sur la première connexion de protocole de transport orienté flux ; et
(c) recevoir un premier de message de contrôle sur la première connexion de protocole de transport orienté flux et, en réponse, arrêter l'envoi de messages SS7 sur la première connexion de protocole de transport orienté flux.

31. Procédé selon la revendication 30, comprenant, après la réception du premier de message de contrôle, la reprise de l'envoi des messages SS7 sur la première connexion de protocole de transport orienté flux en réponse à la réception d'un deuxième message de contrôle sur la première connexion de protocole de transport orienté flux.

32. Procédé selon la revendication 30, comprenant, en réponse à la réception du premier message de contrôle, la commutation des communications SS7 entre les premier et deuxième noeuds de signalisation vers une deuxième connexion de protocole de transport orienté flux établie entre les premier et deuxième noeuds de signalisation.

33. Procédé selon la revendication 30, dans lequel la réception d'un premier message de contrôle inclut la réception du premier de message de contrôle signé en utilisant un algorithme de chiffrement prédéterminé et la vérification que le premier de message de contrôle provient d'un noeud autorisé en utilisant le premier algorithme de chiffrement.

34. Procédé selon la revendication 30, dans lequel l'établissement d'une connexion de protocole de transport orienté flux entre les premier et deuxième noeuds de signalisation, inclut l'établissement de la première connexion de protocole de transport orienté flux entre une passerelle de signalisation et un contrôleur de passerelle de média.

35. Procédé selon la revendication 30, dans lequel l'établissement d'une connexion entre les premier et deuxième noeuds de signalisation inclut l'établissement d'une connexion entre un premier noeud de signalisation SS7 et un noeud IP.

36. Procédé selon la revendication 30, dans lequel l'établissement d'une connexion entre les premier et deuxième noeuds de signalisation inclut l'établissement d'une connexion entre un premier noeud de signalisation SS7 ayant une capacité IP et un deuxième noeud SS7 ayant une capacité IP.

37. Procédé pour traiter des messages d'interface de couche adaptateur de transport (TALI) reçus sur une connexion de protocole de transport orienté flux, le procédé incluant ou exécutant les étapes suivantes consistant à :
(a) recevoir une pluralité de messages TALI sur une connexion de protocole de transport orienté flux ;
(b) identifier le début de chacun des messages TALI en utilisant un premier champ dans chacun des messages TALI ;
(c) identifier la fin de chacun des messages TALI en utilisant un deuxième champ dans chacun des messages TALI ; et
(d) extraire des paquets de message TALI individuels en utilisant les premier et deuxième champs.

38. Procédé selon la revendication 37, comprenant l'identification du contenu de chacun des messages TALI en utilisant un troisième champ dans chacun des messages TALI.

39. Procédé selon la revendication 37, dans lequel la réception d'une pluralité de messages TALI sur une connexion orientée flux inclut la réception d'une pluralité de messages TALI sur une connexion de protocole de transport orienté flux.

40. Procédé selon la revendication 37, dans lequel l'identification du début de chacun des messages TALI inclut l'identification de chacun des messages TALI en utilisant un champ SYNC dans chacun des messages TALI.

41. Procédé selon la revendication 37, dans lequel l'identification de la fin de chacun des messages TALI en utilisant un deuxième champ de données inclut l'identification de la fin de chacun des messages TALI en utilisant un champ LENGTH pour spécifier la longueur de la partie de données de chacun des messages TALI.

42. Procédé selon la revendication 38, dans lequel l'identification du contenu de chacun des messages TALI en utilisant un troisième champ de données inclut l'identification du contenu de chacun des messages TALI en utilisant un champ OPCODE pour spécifier le contenu de chacun des messages TALI.

43. Procédé selon la revendication 37, dans lequel une partie de données de chacun des messages TALI achemine des informations SS7.

44. Élément de réseau de communications pour mettre en application une pile de protocole d'interface de couche adaptateur de transport (TALI), l'élément de réseau de communications comprenant :
(a) un processus TALI adapté pour recevoir des messages SS7, supprimer des informations des couches SS7 1 et 2 à partir des messages SS7, et ajouter un en-tête TALI à chacun des messages SS7 pour former des messages TALI ; et
(b) un processus de protocole de transport orienté flux adapté pour recevoir les messages TALI en provenance du processus TALI, pour ajouter des en-têtes de protocole de transport orienté flux et IP aux messages TALI, et pour envoyer les messages TALI à une application de réception sur un réseau IP sur la base des en-têtes de protocole de transport orienté flux et IP.

45. Élément de réseau de communications selon la revendication 44, comprenant un module de communications de données (DCM) incluant un matériel adapté pour envoyer et recevoir des messages sur le réseau IP, dans lequel le processus TALI est mis en application dans le DCM.

46. Élément de réseau de communications selon la revendication 45, dans lequel le processus de protocole de transport orienté flux est mis en application dans le DCM.

47. Élément de réseau de communications selon la revendication 44, dans lequel le processus de protocole de transport orienté flux est adapté pour recevoir un flux de données TCP en provenance du réseau IP.

48. Élément de réseau de communications selon la revendication 44, dans lequel le processus TALI est adapté pour recevoir le flux de données TCP en provenance du processus de protocole de transport orienté flux et pour identifier les limites des messages TALI individuels dans le flux.

49. Produit de programme informatique comprenant un programme stocké dans un support pouvant être lu par une machine, qui une fois chargé dans un ordinateur universel, provoque l'exécution des étapes du procédé selon les revendications 1 à 43.
